# EUROPEAN PATENT SPECIFICATION

(11) **EP 4 472 185 B1**
(45) Date of publication and mention of the grant of the patent: **25.02.2026**
(21) Application number: 23867218.2
(22) Date of filing: 24.08.2023
(51) Int. Cl.: H04L 51/224, H04L 51/226, H04L 51/214, G06Q 10/10, H04M 1/7243, G06Q 30/018, G06Q 30/0241, G06Q 50/00, H04M 1/72436, H04M 1/72454, H04M 1/72412, H04L 12/18

(54) **NOTIFICATION MESSAGE PROCESSING SYSTEM, METHOD AND APPARATUS**
SYSTEM, VERFAHREN UND VORRICHTUNG ZUR VERARBEITUNG VON BENACHRICHTIGUNGSNACHRICHTEN
SYSTÈME, PROCÉDÉ ET APPAREIL DE TRAITEMENT DE MESSAGE DE NOTIFICATION

(30) Priority: 23.09.2022 CN 202211168318
(43) Date of publication of application: 04.12.2024
(73) Proprietor: Honor Device Co., Ltd., Shenzhen, Guangdong 518040 (CN)
(72) Inventor: CHEN, Wenjie, Shenzhen, Guangdong 518040 (CN)
(74) Representative: Isarpatent
(86) International application number: PCT/CN2023/114664
(87) International publication number: WO 2024/060925

(56) References cited:
- WO-A1-2014/139054
- CN-A- 103 870 224
- CN-A- 107 566 996
- CN-A- 111 404 802
- CN-A- 114 584 613
- CN-A- 115 086 888
- JP-A- 2019 061 537
- US-A1- 2018 167 342
- US-A1- 2021 218 783

## Description

### TECHNICAL FIELD

This disclosure relates to the field of terminals, and in particular, the invention relates to a notification message processing system, method, and apparatus.

### BACKGROUND

With development of smart terminals, mobile phones have increasingly rich functions. Some applications (for example, a schedule application, a flight application, and the like) may be installed on a mobile phone, and may push some messages (for example, schedule information, flight information, and the like) to a user.

However, in some scenarios (for example, an office scenario during a business trip), the user does not use the mobile phone often, but instead uses a personal computer (personal computer, PC) or tablet computer (pad) device for immersive office (focusing on current work) and ignores prompts of notification messages by the mobile phone. As a result, the user misses messages on the mobile phone.
CN 107566996 A relates to a technique for transferring notifications (or communication information) between devices of the same user, but it does not disclose any prioritization based on content type or the usage profile of the receiving device.
US 2021/0218783 A1 relates to discloses a system that prioritizes service notifications sent to a user's terminals based on behavioral factors such as proximity to a service location, response speed, and frequency of inquiries.

### SUMMARY

The object of the present invention is provide a notification message processing system, method, and apparatus, so that a user can view and process message notifications of another electronic device (for example, a mobile phone) in time on a currently used electronic device (for example, a PC or a pad). The user can view message notifications of the another electronic device in a manner that conforms to use habits of the user using the current electronic device, or view notification messages on the current electronic device that the user is more interested in on the another electronic device (for example, the mobile phone), to keep the user from missing important messages of a source device, and better fit requirements of the user, so that user experience can be improved. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

To achieve the foregoing objective, the following technical solutions are used in the embodiments of this application: According to a first aspect according to the invention, a notification message processing system is provided. The notification message processing system is a communication system including a first electronic device and a second electronic device. The first electronic device and the second electronic device log in to a same user account. The first electronic device is configured to receive a first notification message of a first application and a second notification message of a second application. The first electronic device is further configured to send the first notification message and the second notification message to the second electronic device. If the second electronic device meets a preset condition, the second electronic device is configured to determine whether application types corresponding to the first notification message and the second notification message match a device tag of the second electronic device, where the device tag is used for indicating a major use of the second electronic device. If the application type corresponding to the first notification message matches the device tag of the second electronic device, the second electronic device is configured to display the first notification message with a first priority. If the application type corresponding to the second notification message does not match the device tag of the second electronic device, the second electronic device is configured to display the second notification message with a second priority. The first priority is higher than the second priority.

Based on the method provided in the embodiments of this application, if the application type corresponding to the first notification message matches the device tag of the second electronic device, the first notification message is displayed with the first priority. If the application type corresponding to the second notification message does not match the device tag of the second electronic device, the second notification message is displayed with the second priority. The first priority is higher than the second priority. For example, the first notification message may be displayed above (in front of) the second notification message. Because the first notification message matches the device tag of the second electronic device and the second notification message does not match the device tag of the second electronic device, it may be learned that a user is more inclined to view the first notification message rather than the second notification message when using the second electronic device (that is, the first notification message better conforms to use habits of the user using the second electronic device). Therefore, the displaying the first notification message with a high priority better conforms to use habits of the user using the second electronic device, and fits requirements of the user, so that user experience can be improved. For example, when the user uses the second electronic device (for example, a tablet computer) for entertainment, a notification message from an entertainment-type application of the first electronic device (for example, a mobile phone) may be displayed at the top. This manner better conforms to a current requirement (an entertainment requirement) of the user, and keeps a message of another type (for example, a notification message of a work-type application) from disturbing the user, so that the user experience can be improved.

In a possible implementation, the preset condition includes that the first application is not installed on the second electronic device or the first application is installed but not run, the second application is not installed on the second electronic device or the second application is installed but not run, and the second application is not installed on the second electronic device or the second application is installed but not run. In this way, the second electronic device does not receive the first notification message/the second notification message from an application server of the first application/the second application, and receives a notification message of the first application/the second application only from the first electronic device, so that the notification message of the first application/the second application can be kept from being repeatedly displayed on the second electronic device, to avoid bothering the user.

In a possible implementation, the device tag of the second electronic device includes at least one of learning, work, entertainment, sports, socializing, or leisure. The device tag is used for indicating the major use of the second electronic device. For example, when the second electronic device is a laptop computer, the laptop computer is mainly used for office, and the device tag of the laptop computer is office. When the second electronic device is a tablet computer, the tablet computer is mainly used for playing games, and the device tag of the tablet computer is entertainment. When the second electronic device is a television (for example, a smart screen), the major use of the television is to watch movies or TV dramas, and the device tag of the television may be entertainment.

In the invention, the device tag of the second electronic device is determined based on at least one of a use duration or a use frequency of an application on the second electronic device. For example, when the second electronic device is a laptop computer, an office-type application on the laptop computer has a long use duration and a high use frequency. For example, the device tag of the laptop computer may be considered to be office if a use duration and a use frequency of the office-type application on the laptop computer within a preset time (for example, the last 7 days, the last 14 days, the last 30 days, the last half year, or the like) respectively exceed a first value and a second value that are preset.

In a possible implementation, the first electronic device is further configured to: obtain first information and second information, where the first information includes a click frequency of a notification message of the first application within a preset time period and a duration for jumping to an interface of the first application after the notification message of the first application is clicked; and the second information includes a click frequency of a notification message of the second application within a preset time period and a duration for jumping to an interface of the second application after the notification message of the second application is clicked; determine levels of interest of the first notification message and the second notification message based on the first information and the second information; and that the first electronic device is configured to send the first notification message and the second notification message to the second electronic device includes: the first electronic device is configured to: send the first notification message and the level of interest of the first notification message to the second electronic device, and send the second notification message and the level of interest of the second notification message to the second electronic device. That is, a level of interest of an application may be determined based on click information and a jump duration of the corresponding application. The click information may refer to a quantity of clicks of notification messages of the application within a preset time (for example, the last 7 days, the last 14 days, or the last 30 days). Optionally, operation information of a notification message may further include a jump duration. The jump duration may refer to a running duration of the application after the user clicks the notification message to jump to the application (for example, an application A). It can be understood that, when the quantity of clicks is larger, the jump duration is longer, and when a level of interest of an application is higher, the user is more interested in notification messages of the application. Therefore, notification messages are displayed with different priorities based on levels of interest of the notification messages, so that when using the second electronic device, the user can view in time notification messages that the user is more interested in on a source device (the first electronic device), to keep the user from missing important messages of the source device, and better fit the requirements of the user, so that the user experience can be improved.

In a possible implementation, if the first notification message and the second notification message both match the device tag of the second electronic device, the second electronic device is further configured to: determine a display order of the first notification message and the second notification message based on the levels of interest of the first notification message and the second notification message, and display the first notification message with the first priority and display the second notification message with the second priority if the level of interest of the first notification message is higher than the level of interest of the second notification message, where the first priority is higher than the second priority. That is, if display priorities of different notification messages cannot be distinguished based on matching results of the notification messages with the device tag, the display priorities of the different notification messages can be further distinguished based on levels of interest of the different notification messages. Notification messages are displayed with different priorities based on levels of interest of the notification messages, so that when using the second electronic device, the user can view in time notification messages that the user is more interested in on a source device (the first electronic device), to keep the user from missing important messages of the source device, and better fit the requirements of the user, so that the user experience can be improved.

In a possible implementation, if the first notification message and the second notification message both match the device tag of the second electronic device, the second electronic device is further configured to display the first notification message and the second notification message according to a time order of receiving the first notification message and the second notification message. That is, if display priorities of different notification messages cannot be distinguished based on matching results of the notification messages with the device tag, the different notification messages may be further displayed according to the time order.

In a possible implementation, if the first notification message and the second notification message both match the device tag of the second electronic device and the level of interest of the first notification message is the same as the level of interest of the second notification message, the second electronic device is further configured to display the first notification message and the second notification message according to a time order of receiving the first notification message and the second notification message. That is, if display priorities of different notification messages cannot be distinguished based on matching results of the notification messages with the device tag and levels of interest of the notification messages, the different notification messages may be further displayed according to the time order.

In a possible implementation, the second electronic device is further configured to filter out an insignificant notification message, where the insignificant notification message includes at least one of an advertising marketing notification or a fraud notification. In this way, the user can be kept from being disturbed by insignificant notification messages, so that the user experience can be improved.

According to a second aspect of the invention, embodiments of this application provide a notification message processing system. The notification message processing system is a communication system including a first electronic device and a second electronic device. The first electronic device and the second electronic device log in to a same user account. The first electronic device is configured to receive a first notification message of a first application and a second notification message of a second application. The first electronic device is further configured to: obtain first information and second information, where the first information includes a click frequency of a notification message of the first application within a preset time period and a duration for jumping to an interface of the first application after the notification message of the first application is clicked; and the second information includes a click frequency of a notification message of the second application within a preset time period and a duration for jumping to an interface of the second application after the notification message of the second application is clicked; determine levels of interest of the first notification message and the second notification message based on the first information and the second information; and send the first notification message and the level of interest of the first notification message to the second electronic device, and send the second notification message and the level of interest of the second notification message to the second electronic device. If the second electronic device meets a preset condition, the second electronic device is configured to: determine a display order of the first notification message and the second notification message based on the levels of interest of the first notification message and the second notification message, and display the first notification message with a first priority and display the second notification message with a second priority if the level of interest of the first notification message is higher than the level of interest of the second notification message, where the first priority is higher than the second priority.

Based on the method provided in the embodiments of this application, the first notification message is displayed with the first priority and the second notification message is displayed with the second priority if the level of interest of the first notification message is higher than the level of interest of the second notification message, where the first priority is higher than the second priority. Because the priority of displaying the first notification message is higher than that of displaying the second notification message, the first notification message may be displayed above (in front of) the second notification message. Because the level of interest corresponding to the first notification message is higher than a level of interest of the second electronic device, when using the second electronic device, a user can view notification messages that the user is more interested in on a source device (the first electronic device), to keep the user from missing important messages of the source device, and better fit requirements of the user, so that user experience can be improved.

In a possible implementation, the preset condition includes that the first application is not installed on the second electronic device or the first application is installed but not run and the second application is not installed on the second electronic device or the second application is installed but not run. In this way, the second electronic device does not receive the first notification message/the second notification message from an application server of the first application/the second application, and receives a notification message of the first application/the second application only from the first electronic device, so that the notification message of the first application/the second application can be kept from being repeatedly displayed on the second electronic device, to avoid bothering the user.

In a possible implementation, if the level of interest of the first notification message is the same as the level of interest of the second notification message, the second electronic device is further configured to determine whether application types corresponding to the first notification message and the second notification message match a device tag of the second electronic device, where the device tag is used for indicating a major use of the second electronic device. If the application type corresponding to the first notification message matches the device tag of the second electronic device, the second electronic device is configured to display the first notification message with the first priority. If the application type corresponding to the second notification message does not match the device tag of the second electronic device, the second electronic device is configured to display the second notification message with the second priority. The first priority is higher than the second priority.

In a possible implementation, the device tag of the second electronic device includes at least one of learning, work, entertainment, sports, socializing, or leisure.

In the invention, the device tag of the second electronic device is determined based on at least one of a use duration or a use frequency of an application on the second electronic device.

In a possible implementation, if the first notification message and the second notification message both match the device tag of the second electronic device, the second electronic device is further configured to display the first notification message and the second notification message according to a time order of receiving the first notification message and the second notification message.

In a possible implementation, if the level of interest of the first notification message is the same as the level of interest of the second notification message, the second electronic device is further configured to display the first notification message and the second notification message according to a time order of receiving the first notification message and the second notification message.

In a possible implementation, the second electronic device is further configured to filter out an insignificant notification message, where the insignificant notification message includes at least one of an advertising marketing notification or a fraud notification.

According to a third aspect according to the invention, embodiments of this application provide a notification message processing method, applied to a communication system including a first electronic device and a second electronic device. The first electronic device and the second electronic device log in to a same user account. The method includes: The first electronic device receives a first notification message of a first application and a second notification message of a second application. The first electronic device sends the first notification message and the second notification message to the second electronic device. If the second electronic device meets a preset condition, the second electronic device determines whether application types corresponding to the first notification message and the second notification message match a device tag of the second electronic device, where the device tag is used for indicating a major use of the second electronic device. If the application type corresponding to the first notification message matches the device tag of the second electronic device, the second electronic device displays the first notification message with a first priority. If the application type corresponding to the second notification message does not match the device tag of the second electronic device, the second electronic device displays the second notification message with a second priority. The first priority is higher than the second priority.

In a possible implementation, the preset condition includes that the first application is not installed on the second electronic device or the first application is installed but not run and the second application is not installed on the second electronic device or the second application is installed but not run.

In a possible implementation, the device tag of the second electronic device includes at least one of learning, work, entertainment, sports, socializing, or leisure.

In the invention, the device tag of the second electronic device is determined based on at least one of a use duration or a use frequency of an application on the second electronic device.

In a possible implementation, the method further includes: The first electronic device obtains first information and second information, where the first information includes a click frequency of a notification message of the first application within a preset time period and a duration for jumping to an interface of the first application after the notification message of the first application is clicked. The second information includes a click frequency of a notification message of the second application within a preset time period and a duration for jumping to an interface of the second application after the notification message of the second application is clicked. The first electronic device determines levels of interest of the first notification message and the second notification message based on the first information and the second information. That the first electronic device sends the first notification message and the second notification message to the second electronic device includes: The first electronic device sends the first notification message and the level of interest of the first notification message to the second electronic device, and sends the second notification message and the level of interest of the second notification message to the second electronic device.

In a possible implementation, if the first notification message and the second notification message both match the device tag of the second electronic device, the second electronic device determines a display order of the first notification message and the second notification message based on the levels of interest of the first notification message and the second notification message, and displays the first notification message with the first priority and displays the second notification message with the second priority if the level of interest of the first notification message is higher than the level of interest of the second notification message, where the first priority is higher than the second priority.

In a possible implementation, if the first notification message and the second notification message both match the device tag of the second electronic device, the second electronic device displays the first notification message and the second notification message according to a time order of receiving the first notification message and the second notification message.

In a possible implementation, if the first notification message and the second notification message both match the device tag of the second electronic device and the level of interest of the first notification message is the same as the level of interest of the second notification message, the second electronic device displays the first notification message and the second notification message according to a time order of receiving the first notification message and the second notification message.

In a possible implementation, the method further includes: The second electronic device filters out an insignificant notification message, where the insignificant notification message includes at least one of an advertising marketing notification or a fraud notification.

According to a fourth aspect not claimed, embodiments of this application provide a notification message processing method, applied to a communication system including a first electronic device and a second electronic device. The first electronic device and the second electronic device log in to a same user account. The method includes: The first electronic device receives a first notification message of a first application and a second notification message of a second application. The first electronic device obtains first information and second information, where the first information includes a click frequency of a notification message of the first application within a preset time period and a duration for jumping to an interface of the first application after the notification message of the first application is clicked; and the second information includes a click frequency of a notification message of the second application within a preset time period and a duration for jumping to an interface of the second application after the notification message of the second application is clicked; determines levels of interest of the first notification message and the second notification message based on the first information and the second information; and sends the first notification message and the level of interest of the first notification message to the second electronic device, and sends the second notification message and the level of interest of the second notification message to the second electronic device. If the second electronic device meets a preset condition, the second electronic device determines a display order of the first notification message and the second notification message based on the levels of interest of the first notification message and the second notification message, and the second electronic device displays the first notification message with a first priority and displays the second notification message with a second priority if the level of interest of the first notification message is higher than the level of interest of the second notification message, where the first priority is higher than the second priority.

In a possible implementation, the preset condition includes that the first application is not installed on the second electronic device or the first application is installed but not run and the second application is not installed on the second electronic device or the second application is installed but not run.

In a possible implementation, if the level of interest of the first notification message is the same as the level of interest of the second notification message, the method further includes: The second electronic device determines whether application types corresponding to the first notification message and the second notification message match a device tag of the second electronic device, where the device tag is used for indicating a major use of the second electronic device. If the application type corresponding to the first notification message matches the device tag of the second electronic device, the second electronic device displays the first notification message with the first priority. If the application type corresponding to the second notification message does not match the device tag of the second electronic device, the second electronic device displays the second notification message with the second priority. The first priority is higher than the second priority.

In a possible implementation, the device tag of the second electronic device includes at least one of learning, work, entertainment, sports, socializing, or leisure.

In a possible implementation, the device tag of the second electronic device is determined based on at least one of a use duration or a use frequency of an application on the second electronic device.

In a possible implementation, if the first notification message and the second notification message both match the device tag of the second electronic device, the second electronic device displays the first notification message and the second notification message according to a time order of receiving the first notification message and the second notification message.

In a possible implementation, if the level of interest of the first notification message is the same as the level of interest of the second notification message, the second electronic device displays the first notification message and the second notification message according to a time order of receiving the first notification message and the second notification message.

In a possible implementation, the method further includes: The second electronic device filters out an insignificant notification message, where the insignificant notification message includes at least one of an advertising marketing notification or a fraud notification.

According to a fifth aspect not claimed, an embodiment of this application provides a first electronic device, including a sensor, a touch screen, a processor, and a memory, where the memory is configured to store one or more computer programs; and the one or more computer programs stored in the memory, when being executed by the processor, cause the electronic device to implement the method according to any possible design of any foregoing aspect.

According to a sixth aspect according to the invention, an embodiment of this application provides a second electronic device, including a sensor, a touch screen, a processor, and a memory, where the memory is configured to store one or more computer programs; and the one or more computer programs stored in the memory, when being executed by the processor, cause the electronic device to implement the method according to any possible design of any foregoing aspect.

According to a seventh not claimed, an embodiment of this application further provides a computer-readable storage medium, including a computer program, the computer program, when running on an electronic device, causing the electronic device to perform the method according to any possible design of any one of the aspects.

According to an eighth aspect not claimed, an embodiment of this application further provides a computer program product, the computer program product, when running on a terminal, causing the electronic device to perform the method according to any possible design of any one of the aspects.

### BRIEF DESCRIPTION OF DRAWINGS

FIG. 1 is a schematic diagram of a structure of a communication system according to an embodiment of this application;
FIG. 2 is a schematic diagram of signal interaction according to an embodiment of this application;
FIG. 3 is a schematic diagram of a structure of an electronic device according to an embodiment of this application.
FIG. 4 is a schematic diagram of a software architecture according to an embodiment of this application.
FIG. 5 is a schematic diagram of modules of a mobile phone, a tablet computer, and a laptop computer according to an embodiment of this application;
FIG. 6A, FIG. 6B, and FIG. 6C are another schematic diagram of signal interaction according to an embodiment of this application;
FIG. 7A is a schematic diagram of display according to an embodiment of this application;
FIG. 7B is a schematic diagram of display according to an embodiment of this application;
FIG. 7C is a schematic diagram of display according to an embodiment of this application;
FIG. 8 is another schematic diagram of display according to an embodiment of this application;
FIG. 9 is a schematic diagram of a super notification scenario according to an embodiment of this application;
FIG. 10 is another schematic diagram of a super notification scenario according to an embodiment of this application;
FIG. 11 is another schematic diagram of a super notification scenario according to an embodiment of this application;
FIG. 12A is another schematic diagram of display according to an embodiment of this application;
FIG. 12B is another schematic diagram of display according to an embodiment of this application;
FIG. 12C is another schematic diagram of display according to an embodiment of this application;
FIG. 12D is another schematic diagram of display according to an embodiment of this application;
FIG. 13 is another schematic diagram of signal interaction according to an embodiment of this application;
FIG. 14 is another schematic diagram of display according to an embodiment of this application;
FIG. 15 is a schematic signal flowchart according to an embodiment of this application;
FIG. 16 is another schematic signal flowchart according to an embodiment of this application;
FIG. 17 is another schematic signal flowchart according to an embodiment of this application;
FIG. 18 is another schematic signal flowchart according to an embodiment of this application;
FIG. 19 is another schematic signal flowchart according to an embodiment of this application; and
FIG. 20 is another schematic signal flowchart according to an embodiment of this application.

### DESCRIPTION OF EMBODIMENTS

Technical solutions in embodiments of this application are described below with reference to the accompanying drawings in the embodiments of this application. In the descriptions of this application, unless otherwise specified, "/" indicates an "or" relationship between associated objects. For example, A/B may indicate A or B. In this application, "and/or" describes only an association relationship between associated objects and indicates that three relationships may exist. For example, A and/or B may indicate the following three cases: Only A exists, both A and B exist, and only B exists, where A and B may be singular or plural. In addition, in descriptions of this application, unless otherwise specified, "a plurality of" means two or more than two. "At least one (item) of the following" or a similar expression thereof means any combination of these items, including a single item or any combination of a plurality of items. For example, at least one of a, b, or c may represent a, b, c, "a and b", "a and c", "b and c", or "a, b, and c", where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms "first", "second", and the like, and do not limit a quantity and an execution order, and the terms "first", "second", and the like are not limited to being necessarily different. Moreover, in embodiments of this application, terms such as "illustrative" and "for example" are used for presenting an example, an instance, or an illustration. Any embodiment or design scheme described as an "exemplary" or "for example" in the embodiments of this application should not be explained as being more preferred or having more advantages than another embodiment or design scheme. To be precise, the terms such as "illustrative" and "for example" are intended to present a related concept in a specific manner to facilitate understanding.

For clarity and brevity of the following embodiments, related concepts or technologies are briefly described first.

Screen projection mode: When an electronic device is in the screen projection mode, the electronic device may be a screen projection receiving end or may be a screen projection sending end. When the electronic device is a screen projection receiving end (for example, a PC), the electronic device may display/play media content from a screen projection sending end. When the electronic device is a screen projection sending end (for example, a mobile phone), the electronic device may display a screen projection control interface. The screen projection control interface may include control buttons (for example, pause, fast forward, close, and the like) to control display/playback of media content from a screen projection receiving end.

Immersive mode: When the electronic device (for example, the mobile phone) is in the immersive mode, a status bar and virtual buttons are automatically hidden (or the status bar and virtual buttons are translucent), and an application is automatically displayed full screen. In this mode, the application occupies all screen space.

Do-not-disturb mode: After the do-not-disturb mode is turned on, except for an allowed disturbance item (for example, an alarm clock), the electronic device may be muted to avoid affecting a current process. The status bar may display a do-not-disturb icon (for example, a crescent icon) after the do-not-disturb mode is turned on.

Game mode: After the game mode is enabled, the electronic device may configure answering of incoming calls in the background, intelligent allocation of more resources to games, automatic rejection of incoming calls, prohibition of automatic connection to a WLAN, control of whether to display floating notifications within games (for example, a user may prohibit display of floating notifications during running of games), and the like.

At present, in some scenarios (for example, an office scenario during a business trip), the user does not use the mobile phone often, but instead uses a PC or a Pad device for immersive office (a scenario in which the user focuses on office; for example, when the user uses the PC or Pad device for immersive office on a business trip, the user focuses on current work and is not disturbed by a mobile phone prompt message). As a result, the user may miss important messages on the mobile phone.

At present, to improve user activity, more and more application (application, APP) vendors set out to investigate a more efficient manner of pushing notification messages across devices (sending notification messages on one electronic device to another electronic device) to reach users. In the meantime, mobile phone manufacturers also start to investigate and launch the capability of indicating devices to push notification messages based on user experience. In this dual context, notifications on a mobile device of a user are flooded and difficult to manage. As a result, the user is frequently disturbed by insignificant notifications, and notifications that the user is actually interested in are swamped in a lot of insignificant notifications and are difficult to find after being missed.

Embodiments of this application provide a notification message processing method, so that a user can view and process message notifications conveniently between different devices. Notification messages can effectively reach the user in a case of weak disturbance, to help the user to identify important notifications from among numerous disorderly notifications, thereby improving user experience.

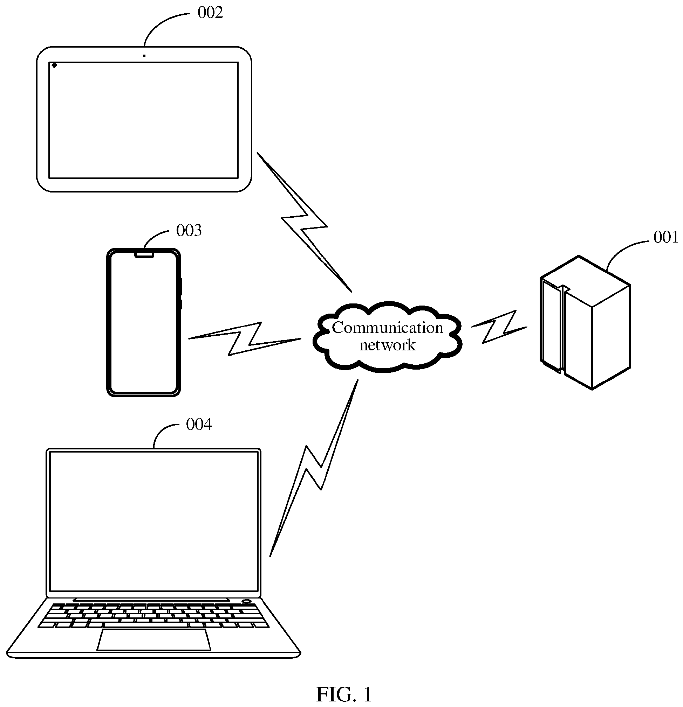

FIG. 1 is a schematic diagram of an application scenario to which an embodiment of this application is applicable.

As shown in FIG. 1, the application scenario includes a server 001, an electronic device 002, an electronic device 003, and an electronic device 004.

The server 001 can exchange information with the electronic device 002, the electronic device 003, and the electronic device 004. For example, the electronic device 002, the electronic device 003, and the electronic device 004 may obtain system authentication account information (for example, an Honor account) from the server 001, so that the electronic device 002, the electronic device 003, and the electronic device 004 may verify whether peer ends log in to a same system authentication account. In some scenarios, the server 001 may be connected to the electronic device 002, the electronic device 003, and the electronic device 004 by a communication network. The server 001 may be a cloud server, a server cluster, or the like located on a network side.

In FIG. 1, the electronic device 002, the electronic device 003, and the electronic device 004 may be various different types of electronic devices. For example, the electronic device 002 may be a tablet computer, the electronic device 003 may be a mobile phone, and the electronic device 004 may be a laptop computer.

In FIG. 1, the electronic device 002, the electronic device 003, and the electronic device 004 establish a connection with each other in a wired and/or wireless manner. The electronic device 002, the electronic device 003, and the electronic device 004 may establish a connection with the server 001 in a wired and/or wireless manner. For example, the electronic device 002, the electronic device 003, and the electronic device 004 may be interconnected by a wireless communication network. The wireless communication network may be a local area network or may be a wide area network switched through a relay (relay) device. When the communication network is the local area network, for example, the communication network may be a near-field communication network such as a Wi-Fi hotspot network, a Wi-Fi P2P network, a Bluetooth network, a Zigbee network, or an NFC network. When the communication network is the wide area network, for example, the communication network may be a 3^{rd}-generation wireless telephone technology (3^{rd}-generation wireless telephone technology, 3G) network, a 4^{th}-generation mobile communication technology (the 4^{th} generation mobile communication technology, 4G) network, a 5^{th}-generation mobile communication technology (5^{th}-generation mobile communication technology, 5G) network, a future evolved public land mobile network (public land mobile network, PLMN), the Internet, or the like. In the scenario shown in FIG. 1, data, for example, pictures, texts, videos, or retrieval results of the electronic devices for objects such as pictures, texts, or videos, may be sent between different electronic devices through the communication network.

It is to be noted that, the foregoing system may further include more electronic devices, for example, may further include a smart television, a smart watch, and the like. Alternatively, the foregoing system may include fewer than three electronic devices, for example, a mobile phone and a laptop computer alone, or a mobile phone and a tablet computer alone, and the like. This is not limited in the embodiments of this application.

In the embodiments of this application, after being connected to a same access point device, an electronic device in FIG. 1 further needs to perform authentication on system authentication accounts of other electronic devices in advance. After the authentication succeeds, the electronic device may receive messages sent by the other electronic devices.

Specifically, the electronic device 002 (for example, a tablet computer), the electronic device 003 (for example, a mobile phone), and the electronic device 004 (for example, a laptop computer) in FIG. 1 are still used as an example. For ease of uniform description, the mobile phone, the laptop computer, and the tablet computer are used for description below. The mobile phone, the laptop computer, and the tablet computer may all be connected to a same access point (AP). For example, the mobile phone, the laptop computer, and the tablet computer are all connected to a same router, or the mobile phone, the laptop computer, and the tablet computer are all connected to a same Wi-Fi hotspot.

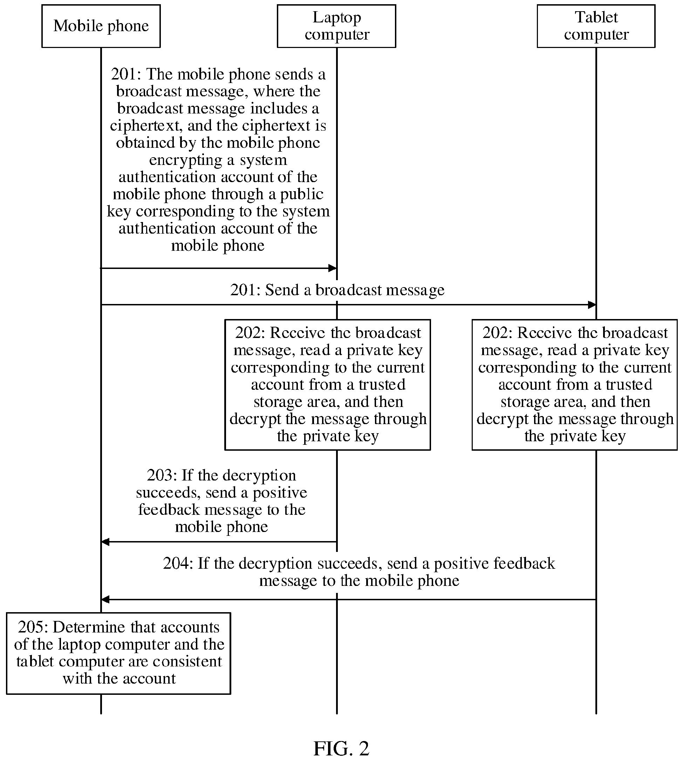

After a network connection is established between the electronic devices, the mobile phone may first perform authentication on other devices connected to the same access point, that is, determine whether the other devices have a same system authentication account as the mobile phone. The mobile phone determines a target device set with the same system authentication account, and then the mobile phone and the electronic devices in the target device set have completed authentication. Specifically, as shown in FIG. 2, a method of the authentication includes the following steps.

Step 201: The mobile phone sends a broadcast message, where the broadcast message includes a ciphertext, and the ciphertext is obtained by the mobile phone encrypting a system authentication account of the mobile phone through a public key corresponding to the system authentication account of the mobile phone.

The mobile phone may obtain the public key corresponding to the system authentication account (referred to as the account for short) of the mobile phone from a server in advance, and store the public key in a trusted storage area. For example, the account of the mobile phone may be an Honor account. The mobile phone may obtain the public key corresponding to the account from the trusted storage area, then encrypt the Honor account through the public key, and then generate the broadcast message.

Step 202: After receiving the broadcast message, the laptop computer and the tablet computer may read private keys corresponding to system authentication accounts of the devices from the trusted storage area, and then decrypt the broadcast message through the private keys.

The laptop computer and the tablet computer may obtain the private keys corresponding to the system authentication accounts of the devices from the server in advance. For example, if the accounts of the laptop computer and the tablet computer are both Honor accounts, the laptop computer and the tablet computer may obtain private keys corresponding to the Honor accounts of the devices from an Honor cloud server in advance, and store the private keys in the trusted storage area.

Step 203: If the decryption succeeds, the laptop computer sends a positive feedback message to the mobile phone, where the positive feedback message indicates that the laptop computer decrypts the ciphertext successfully.

Step 204: If the decryption succeeds, the tablet computer sends a positive feedback message to the mobile phone, where the positive feedback message indicates that the tablet computer decrypts the ciphertext successfully.

Step 205: The mobile phone may determine that the system authentication accounts of the laptop computer and the tablet computer are consistent with that of the mobile phone based on the positive feedback messages from the laptop computer and the tablet computer, so that a network connection is established among the mobile phone, the laptop computer, and the tablet computer, to complete networking.

In a possible embodiment, when sending the broadcast message, the mobile phone may start a timer. When a timing duration ends, the mobile phone determines a positive feedback message received within the duration (for example, 3s). Assuming that the mobile phone receives the positive feedback messages from the laptop computer and the tablet computer within the duration, the mobile phone, the laptop computer, and the tablet computer have completed networking.

It can be learned that after receiving the broadcast message sent by the mobile phone, the laptop computer and the tablet computer may decrypt the broadcast message through the private keys corresponding to the accounts of the devices, and if the decryption succeeds, it indicates that the devices and the electronic device (that is, the mobile phone) sending the broadcast message log in to a same system authentication account. In this way, the mobile phone, the laptop computer, and the tablet computer have completed networking and authentication. After the mobile phone, the laptop computer, and the tablet computer have completed networking and authentication, the mobile phone, the laptop computer, and the tablet computer can be considered to be constructed to form a super terminal. Data access between the electronic devices included in the super terminal is more convenient and quick, the security of the data access between the electronic devices can be ensured, and data is prevented from being illegally accessed. In addition, the foregoing networking and account authentication processes may be automatically performed without manual operations by a user, so that user experience can be improved.

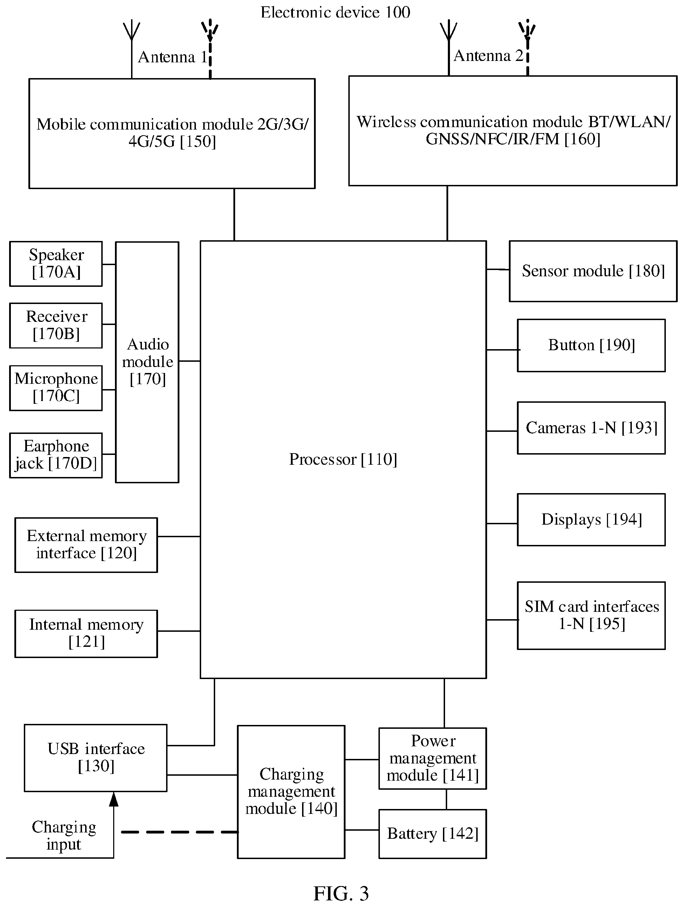

An example in which an electronic device (the electronic device 002 to the electronic device 004) has a hardware structure of an electronic device 100 is used for description below. FIG. 3 is a schematic diagram of the hardware structure of the electronic device 100. The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not specifically limited in this embodiment of this application.

The electronic device 100 may include a processor 110, an external memory interface 120, an internal memory 121, a universal serial bus (Universal Serial Bus, USB) interface 130, a charging management module 140, a power management unit 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a camera 193, a display 194, a subscriber identity module (Subscriber Identification Module, SIM) card interface 195, and the like.

It may be understood that an example structure in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components in the figure may be implemented by hardware, software, or a combination of software and hardware.

The processor 110 may include one or more processing units. For example, the processor 110 may include an application processor (Application Processor, AP), a modem processor, a graphics processing unit (Graphics Processing unit, GPU), an image signal processor (Image Signal Processor, ISP), a controller, a memory, a video codec, a digital signal processor (Digital Signal Processor, DSP), a baseband processor, and/or a neural-network processing unit (Neural-network Processing Unit, NPU). Different processing units may be independent components, or may be integrated into one or more processors.

The controller may be a nerve center and a command center of the electronic device 100. The controller may generate an operation control signal according to instruction operation code and a time-sequence signal, and control obtaining and execution of instructions.

A memory may also be disposed in the processor 110, configured to store instructions and data. In some embodiments, the memory in the processor 110 is a cache. The memory may store instructions or data that is just used or used cyclically by the processor 110. If the processor 110 needs to use the instructions or the data again, the processor may directly call the instructions or the data from the memory, which avoids repeated access, and reduces a waiting time of the processor 110, thereby improving system efficiency.

The external memory interface 120 may be configured to be connected to an external storage card such as a micro SD card, to expand a storage capability of the electronic device 100. The external storage card communicates with the processor 110 through the external memory interface 120, to implement a data storage function, for example, for example, store files such as music and a video into the external storage card.

The internal memory 121 may be configured to store computer-executable program code. The executable program code includes instructions. The processor 110 runs the instructions stored in the internal memory 121, to implement various functional applications and data processing of the electronic device 100. The internal memory 121 may include a program storage area and a data storage area. The program storage area may store an operating system, an application required by at least one function (such as a voice playing function and an image/video playing function), and the like. The data storage area may store data (such as audio data or a phone book) created in a use process of the electronic device 100.

In some embodiments, the processor 110 may include one or more interfaces. The USB interface 130 is an interface that complies with the USB standard specification, and may be specifically a Mini USB interface, a Micro USB interface, a USB Type C interface, and the like. The USB interface 130 may be configured to be connected to a charger to charge the electronic device 100, or may be used for data transmission between the electronic device 100 and a peripheral device, or may be configured to be connected to a headset, to play audio through the headset. The interface may also be used for connecting to another electronic device 100, such as an AR device.

The charging management module 140 is configured to receive charging input from the charger. The charger may be a wireless charger, or may be a wired charger. In some embodiments of wired charging, the charging management module 140 may receive a charging input of a wired charger through the USB interface 130. In some embodiments of wireless charging, the charging management module 140 may receive wireless charging inputted through a wireless charging coil of the electronic device 100. The charging management module 140 may further supply power to the electronic device through a power management module 141 while charging the battery 142.

The power management module 141 is configured to be connected to the battery 142, the charging management module 140, and the processor 110. The power management module 141 receives input of the battery 142 and/or the charging management module 140, and supplies power to the processor 110, the internal memory 121, the display 194, the camera 193, the wireless communication module 160, and the like. The power management module 141 may also be configured to monitor parameters such as a battery capacity, a quantity of battery cycles, and a battery health status (power leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna of the electronic device 100 may be configured to cover one or more communication frequency bands. Different antennas may be multiplexed to improve antenna utilization.

The mobile communication module 150 may provide a solution to wireless communication such as 2G/3G/4G/5G applied to the electronic device 100. The mobile communication module 150 may include at least one filter, a switch, a power amplifier, a low noise amplifier (Low Noise Amplifier, LNA), and the like. The mobile communication module 150 may receive an electromagnetic wave through the antenna 1, perform processing such as filtering and amplification on the received electromagnetic wave, and send the electromagnetic wave to the modem processor for demodulation. The mobile communication module 150 may further amplify a signal modulated by the modem processor, and convert the signal into an electromagnetic wave through the antenna 1 for radiation.

The wireless communication module 160 may provide a solution applied to the electronic device 100 for wireless communication such as a wireless local area network (Wireless Local Area Networks, WLAN) (for example, a Wi-Fi network), Bluetooth (Bluetooth, BT), a global navigation satellite system (Global Navigation Satellite System, GNSS), frequency modulation (Frequency Modulation, FM), NFC, and an infrared (Infrared, IR) technology. The wireless communication module 160 may be one or more devices that integrate at least one communication processing module. The wireless communication module 160 receives an electromagnetic wave through the antenna 2, performs frequency modulation on and filters the electromagnetic wave signal, and sends a processed signal to the processor 110. The wireless communication module 160 may further receive a to-be-sent signal from the processor 110, perform frequency modulation on and amplify the to-be-sent signal, and convert the to-be-sent signal into an electromagnetic wave through the antenna 2 for radiation.

In some embodiments, the antenna 1 and the mobile communication module 150 of the electronic device 100 are coupled, and the antenna 2 and the wireless communication module 160 of the electronic device 100 are coupled, so that the electronic device 100 can communicate with a network and another device via a wireless communication technology.

The electronic device 100 may implement an audio function, for example, music playback or recording, by using the audio module 170, the speaker 170A, the receiver 170B, the microphone 170C, the headset jack 170D, the AP, and the like.

The audio module 170 is configured to convert digital audio information into analog audio signal output, and is also configured to convert analog audio input into a digital audio signal.

The speaker 170A, also referred to as a "speaker", is configured to convert an audio electrical signal into a sound signal.

The receiver 170B, also referred to as a "handset", is configured to convert an audio electrical signal into a sound signal.

The microphone 170C, also referred to as a "mic" and a "mike", is configured to convert a sound signal into an electrical signal. At least one microphone 170C may be disposed in the electronic device 100.

The headset jack 170D is configured to be connected to a wired headset.

The sensor module 180 may include one or more sensors, and these sensors may be of a same type or different types. The sensor module 180 may include a pressure sensor, a gyro sensor, an acceleration sensor, a distance sensor, an optical proximity sensor, a fingerprint sensor, and a touch sensor, an ambient light sensor, and the like.

The button 190 includes a power button, a volume button, and the like. The button 190 may be a mechanical button, or a touch-type button. The electronic device 100 may receive a button input, and generate a button signal input related to user setting and functional control of the electronic device 100.

The display 194 is configured to display an image, a video, or the like. The display 194 includes a display panel. The display panel may be a liquid crystal display (Liquid Crystal Display, LCD), an organic light-emitting diode (Organic Light-Emitting Diode, OLED), an active-matrix organic light emitting diode (Active-Matrix Organic Light Emitting Diode, AMOLED), a flexible light-emitting diode (Flex Light-Emitting Diode, FLED), a Mini LED, a Micro LED, a Micro-OLED, quantum dot light emitting diodes (Quantum Dot Light Emitting Diodes, QLED), or the like. In some embodiments, the electronic device 100 may include one or N displays 194, where N is a positive integer greater than 1.

The electronic device 100 implements a display function by using the GPU, the display 194, the application processor, and the like. The GPU is a microprocessor for image processing and is connected to the display 194 and the application processor. The GPU is configured to perform mathematical and geometric calculations, and is configured to render graphics. The processor 110 may include one or more GPUs that execute program instructions to generate or change display information.

The electronic device 100 may implement an image obtaining function by using the ISP, the camera 193, the video codec, the GPU, the display 194, the application processor, and the like.

The ISP is configured to process data fed back by the camera 193. For example, during shooting, a shutter is opened, and light is transferred to a photosensitive element of the camera through a lens. An optical signal is converted into an electrical signal. The photosensitive element of the camera transfers the electrical signal to the ISP for processing, to convert the electrical signal into an image or a video visible to naked eyes. The ISP may further optimize an algorithm for noise, brightness, and complexion. The ISP may alternatively optimize parameters such as exposure and a color temperature of a photographing scenario. In some embodiments, the ISP may be disposed in the camera 193.

The camera 193 is configured to capture a still image or a video. An optical image is generated for an object through the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image or a video signal. The ISP outputs the digital image or the video signal to the DSP for processing. The DSP converts the digital image or the video signal into an image or a video signal in a standard format, for example, RGB or YUV.

In some embodiments, the electronic device 100 may include one or N cameras 193, and N is a positive integer greater than 1. For example, in some embodiments, the electronic device 100 may obtain images of a plurality of exposure coefficients through the N cameras 193. Further, during video post-processing, the electronic device 100 may synthesize an HDR image based on the images of the plurality of exposure coefficients via a high dynamic range (High Dynamic Range, HDR) technology.

The video encoder and decoder is configured to compress or decompress a digital video. The electronic device 100 may support one or more video codecs. In this way, the electronic device 100 may play or record videos in a plurality of encoding formats, for example, moving picture experts group (Moving Picture Experts Group, MPEG) 1, MPEG 2, MPEG 3, MPEG 4, and the like.

The NPU is a neural-network (neural-network, NN) computing processor, quickly processes input information by referring to a structure of a biological neural network, for example, by referring to a mode of transmission between human brain neurons, and may further continuously perform self-learning. The NPU may be used to implement an application such as intelligent cognition of the electronic device 100, for example, image recognition, facial recognition, voice recognition, and text understanding.

The SIM card interface 195 is configured to connect to a SIM card. The SIM card may be inserted into the SIM card interface 195 or plugged from the SIM card interface 195, to come into contact with or be separated from the electronic device 100. The electronic device 100 may support one or N SIM card interfaces, N being a positive integer greater than 1. The electronic device 100 interacts with a network through a SIM card, to implement functions such as a call and data communication. In some embodiments, the electronic device 100 uses an eSIM, that is, an embedded SIM card. The eSIM card may be embedded in the electronic device 100 and cannot be separated from the electronic device 100.

A software system of the electronic device 100 may use a layered architecture, an event-driven architecture, a microkernel architecture, a microservice architecture, or a cloud architecture. In this embodiment of the present invention, an Android system with a layered architecture is used as an example to describe a software structure of the electronic device 100.

In the layered architecture, the software is divided into several layers, and each layer has a clear role and task. The layers communicate with each other through a software interface. In some embodiments, the Android system is divided into five layers, namely, an application layer, an application framework layer, an Android runtime (Android runtime) and a system library, a HAL layer, and a kernel layer from top to bottom.

The application layer may include a series of application packages.

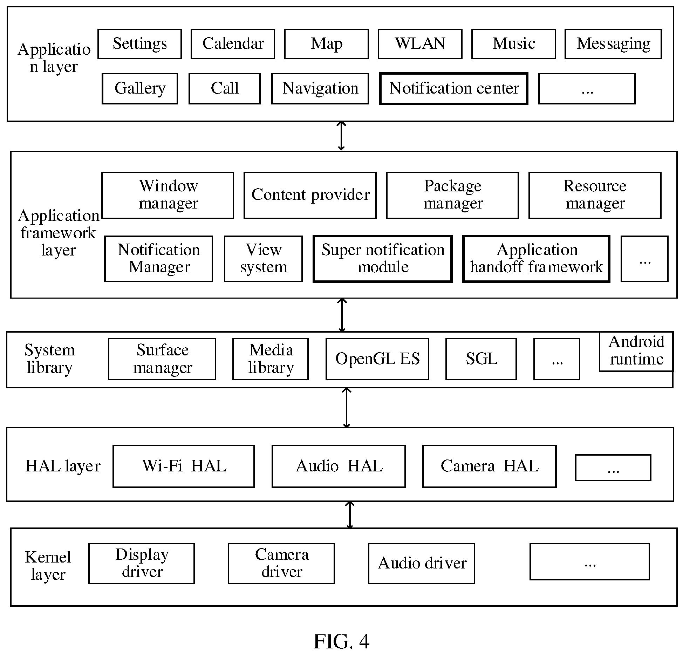

As shown in FIG. 4, an application package may include applications such as Notification center (which may also be referred to as a notification bar/pull-down notification bar, notification management, or the like), Settings, Gallery, Calendar, Phone, Map, Navigation, WLAN, Bluetooth, Music, Video, and Messaging. Certainly, the application layer may further include other application packages such as a chat application (for example, WeChat^{®}), a payment application, a shopping application, a bank application, or a financial application. This is not limited in this application.

In the embodiments of this application, when the electronic device 100 is a mobile phone, the application package may further include a first application (referred to as a first application for short). The first application may be a mobile phone-default or a user-set application with super notifications allowed. An application with super notifications allowed refers to that when a terminal device on which the application is installed receives a notification message corresponding to the application, it is allowed to transfer the notification message corresponding to the application to other authenticated devices within a same networking environment. In this way, other devices (on which the application is not installed) may display the notification message of the application, so that a user can be kept from missing important messages.

For example, the first application may include a social messaging-type application, for example, WeChat^{®}, QQ^{®}, and the like. Alternatively, the first application may include a smart office-type application, for example, Tencent Meeting^{®}, DingTalk^{®}, Mail, Calendar, and the like. Further alternatively, the first application may include a smart travel-type application, for example, Umetrip^{®}, Flight Master^{®}, Gaotie Guanjia^{®}, and the like.

The notification center is configured to obtain notification messages of a plurality of applications, and display the notification messages of the plurality of applications in a pull-down list. In the embodiments of this application, the plurality of applications include the first application and further include other applications than the first application.

The application framework layer provides an application programming interface (application programming interface, API) and a programming framework for an application at the application layer. The application framework layer includes some predefined functions. For example, the application framework layer may include an activity manager, a window manager, a content provider, a view system, a resource manager, a notification manager, a super notification module, an application handoff framework, and the like. This is not limited in this embodiment of this application.

The super notification module has different functions on electronic devices of different types. For a source device (for example, a first electronic device), the super notification module may be configured to determine whether an application corresponding to a currently received notification message or a notification message in the notification center is an application (for example, the first application) with super notifications allowed. The super notification module may encapsulate the notification message of the application with super notifications allowed, and send the encapsulated notification message to the application handoff framework. For a peer device (for example, a second electronic device), the super notification module may be configured to determine whether a second electronic device is in use, and determine whether an application (for example, the first application) with super notifications allowed is installed/run on the second electronic device.

The application handoff framework is configured to communicate with other electronic devices via short-range communication technologies. The short-range communication technologies may include a Wi-Fi hotspot network, a Wi-Fi P2P network, a Bluetooth network, a Zigbee network, or a near field communication (near field communication, NFC) network, and the like. This is not limited in this application.

The window manager is configured to manage a window application. The window manager may obtain a size of a display, determine whether there is a status bar, lock a screen, capture a screen, and the like.

The content provider is configured to store and obtain data and make the data accessible to an application program. The data may include a video, an image, an audio, calls that are made and received, a browsing history and bookmarks, an address book, and the like.

The view system includes visual controls such as a control for displaying a text and a control for display an image. The view system may be configured to construct an application program. A display interface may be formed by one or more views. For example, a display interface including a short message notification icon may include a view for displaying a text and a view for displaying a picture.

A phone manager is configured to provide a communication function of the electronic device 100, for example, call status management (including connected and hang-up).

The resource manager provides various resources such as a localized character string, an icon, an image, a layout file, and a video file for an application program.

The notification manager enables an application to display notification information in the status bar that may be used to convey a message of a notification type, where the message may disappear automatically after a short stay without user interaction. For example, the notification manager is configured to notify a user of download completion or remind a user of a message. The notification manager may alternatively be a notification that appears on a top status bar of the system in the form of a graph or a scroll bar text, for example, a notification of an application running on the background, or may be a notification that appears on the screen in the form of a dialog window. For example, text information is prompted on a status bar, a prompt tone is made, the electronic device vibrates, or an indicator light flash.

The system library may include a plurality of function modules, such as a surface manager, a media library, a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of common audio and video formats, and also supports static image files, and the like. The media library may support a plurality of audio and video encoding formats, such as MPEG 4, H.264, MP3, AAC, AMR, JPG, and PNG.

OpenGL ES is configured to implement three-dimensional graphics drawing, image rendering, compositing, layer processing, and the like.

SGL is a drawing engine for 2D drawing.

The Android runtime (Android Runtime) includes a kernel library and a virtual machine. The Android runtime is responsible for scheduling and managing the Android system. The core library includes two parts: one part is a performance function that the Java language needs to invoke, and the other part is a core library of Android. The application layer and the application framework layer are run in the virtual machine. The virtual machine executes java files of the application layer and the application framework layer as binary files. The virtual machine is configured to execute functions such as object lifecycle management, stack management, thread management, security and exception management, and garbage collection.

The HAL layer is obtained by encapsulating a Linux kernel driver, provides an interface for an upper layer, and shields an implementation detail of hardware of a lower layer.

The HAL layer may include a Wi-Fi HAL, an audio (audio) HAL, and a camera HAL.

The kernel layer is a layer between hardware and software. The kernel layer includes at least a display drive, a camera drive, an audio drive, a sensor drive, and the like.

Interaction between devices and interaction between internal modules of the devices in a notification message processing method provided in the embodiments of this application are exemplarily described below.

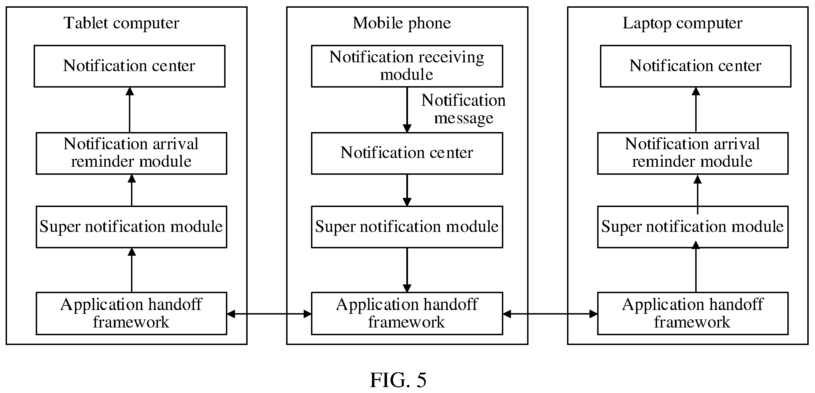

As shown in FIG. 5, the devices in the notification message processing method provided in the embodiments of this application may include a tablet computer, a mobile phone, and a laptop computer. The mobile phone may include a notification receiving module, a notification center, a super notification module, and an application handoff framework. The tablet computer may include a notification center, a notification arrival reminder module, a super notification module, and an application handoff framework. The laptop computer may include a notification center, a notification arrival reminder module, a super notification module, and an application handoff framework.

As shown in FIG. 5, after receiving a notification message (for example, a first notification message of a first application and a second notification message of a second application), the notification receiving module of the mobile phone may send the notification message to the notification center. Optionally, the mobile phone may also include a notification arrival reminder module, configured to display a banner notification on an interface of the mobile phone. If a user fails to process the banner notification in time, a notification message corresponding to the banner notification is received in the notification center. The notification center may send the notification message to the super notification module. The super notification module may determine whether an application (for example, the first application and the second application) corresponding to the notification message is an application with super notifications allowed. If the application corresponding to the notification message is an application with super notifications allowed, the super notification module may encapsulate the notification message, and send the encapsulated notification message to the application handoff framework. The application handoff framework may send the encapsulated notification message to other authenticated devices in a networking environment. If the mobile phone and the laptop computer have completed networking and authentication, the application handoff framework of the mobile phone may send the notification message to the application handoff framework of the laptop computer. If the mobile phone and the tablet computer have completed networking and authentication, the application handoff framework of the mobile phone may send the notification message to the application handoff framework of the tablet computer. The application handoff framework of the laptop computer/the tablet computer may send the received notification message to the super notification module. The super notification module may determine whether the application (for example, the first application and the second application) corresponding to the notification message is installed/run on the laptop computer/the tablet computer, and determine whether the laptop computer/the tablet computer is in use. If it is determined that the first application and the second application are not installed/run on the laptop computer/the tablet computer and the laptop computer/the tablet computer is in use, the super notification module may send content of the notification message (the first notification message and the second notification message) to the notification arrival reminder module. The notification arrival reminder module of the laptop computer/the tablet computer may display the banner notification on the interface of the mobile phone based on the content of the notification message. If the user fails to process the banner notification (for example, does not click the banner notification) in time, the notification arrival reminder module of the laptop computer/the tablet computer may send the content of the notification message to the notification center (that is, the notification message corresponding to the banner notification is received in the notification center). The notification center may match a notification message from the mobile phone against a device tag of the laptop computer/the tablet computer, and respectively determine whether application types corresponding to the first notification message and the second notification message match a device tag of a second electronic device. The device tag is used for identifying a major use of the electronic device, and for example, may include tags such as learning, work, entertainment, sports, socializing, leisure, and the like. If the application type corresponding to the first notification message matches the device tag of the second electronic device, the first notification message is displayed with a first priority. If the application type corresponding to the second notification message does not match the device tag of the second electronic device, the second notification message is displayed with a second priority. The first priority is higher than the second priority. Because the priority of displaying the first notification message is higher than that of displaying the second notification message, the first notification message may be displayed above (in front of) the second notification message. Because the first notification message matches the device tag of the second electronic device and the second notification message does not match the device tag of the second electronic device, it may be learned that a user is more inclined to view the first notification message rather than the second notification message when using the second electronic device (that is, the first notification message better conforms to use habits of the user using the second electronic device). Therefore, the displaying the first notification message with a high priority better conforms to use habits of the user using the second electronic device, and fits requirements of the user, so that user experience can be improved.

In this way, when the mobile phone determines that the notification message (for example, the first notification message of the first application and the second notification message of the second application) of the application conforms to a trigger condition of a super notification function (that is, it is allowed to transfer the notification messages of the first application and the second application to the laptop computer or the tablet computer), the notification message of the application may be transmitted to the laptop computer or the tablet computer via short-range communication technologies. The content of the notification message from the mobile phone may be displayed on the laptop computer or the tablet computer based on priority information of the notification message. In this way, the user can view a notification message of an application on a source end (for example, the mobile phone) in time. This conforms to the use habits of the user using the second electronic device, and better fits the requirements of the user, so that the user experience can be improved. For example, when the user uses the tablet computer for entertainment, a notification message from an entertainment-type application of the source end (for example, the mobile phone) may be displayed at the top. This manner better conforms to a current requirement (an entertainment requirement) of the user, and keeps a message of another type (for example, a notification message of a work-type application) from disturbing the user, so that the user experience can be improved.

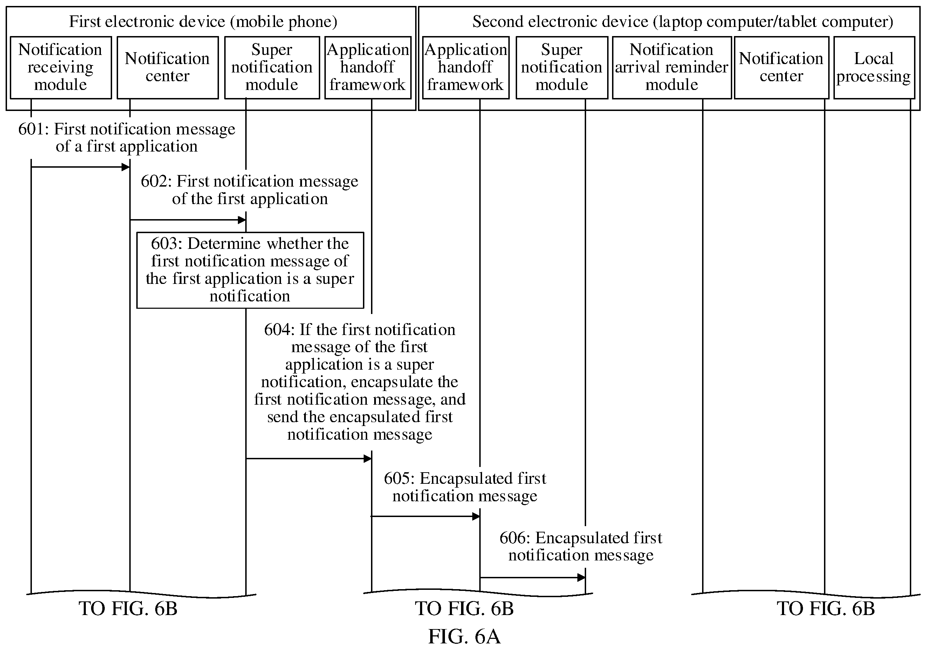

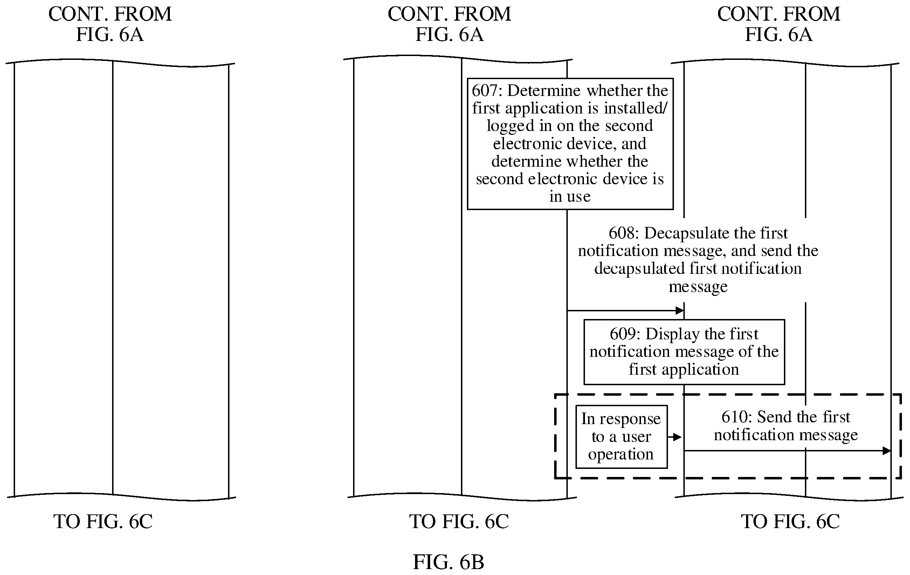

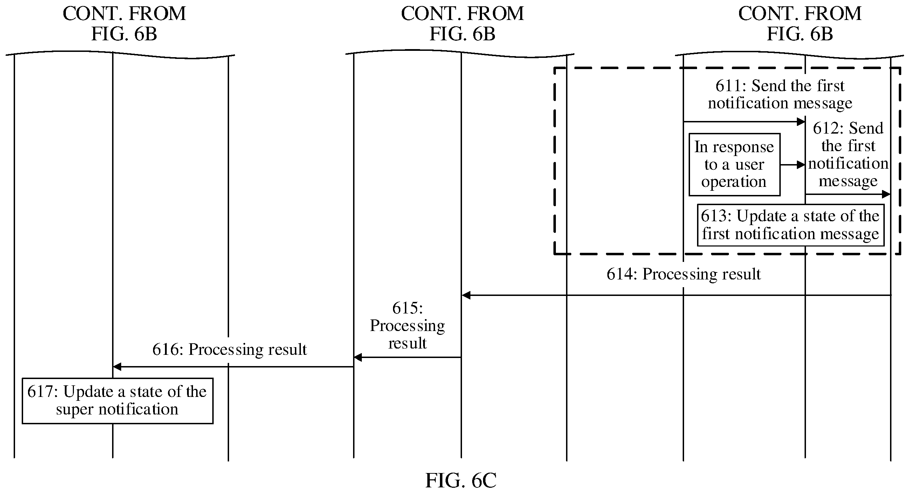

As shown in FIG. 6A, FIG. 6B, and FIG. 6C, an embodiment of this application provides a notification message processing method. Notification message transfer (message transmission) performed between a first electronic device and a second electronic device is used as an example for description. The first electronic device is a source device, and for example, may be a mobile phone. The second electronic device is a peer device, and for example, may be a laptop computer or a tablet computer.

The first electronic device and the second electronic device have completed networking and system account authentication. The first electronic device may include a notification receiving module, a notification center, a super notification module, and an application handoff framework. The second electronic device may include a notification center, a notification arrival reminder module, a super notification module, and an application handoff framework. The method includes the following steps.

601: The notification receiving module of the first electronic device sends a first notification message of a first application to the notification center of the first electronic device.

The notification receiving module of the first electronic device may receive the first notification message of the first application from an application server (a server corresponding to the first application), and then may send the first notification message of the first application to the notification center of the first electronic device. The notification center of the first electronic device is configured to receive and display notification messages of a plurality of applications installed on the first electronic device. The plurality of applications include the first application.

The first application may be a user-set application with super notifications allowed. An application with super notifications allowed refers to that when a terminal device on which the application is installed receives a notification message corresponding to the application, it is allowed to transfer the notification message corresponding to the application to other authenticated devices within a same networking environment. In this way, other devices (on which the application is not installed) may display the notification message of the application, so that a user can be kept from missing notification messages of the application.

For example, a type and an example of the first application may be shown in Table 1:

**Table 1**

| Type of the first application | Example |
|---|---|
| Social messaging | Phone, Messaging, WeChat^{®}, QQ^{®}, or the like |
| Smart office | Tencent Meeting^{®}, DingTalk^{®}, Mail, Calendar, Memo, or the like |
| Smart travel | Weather, Map, Umetrip^{®}, Flight Master, Gaotie Guanjia, or the like |
| News reading | Jinri Toutiao^{®}, Netease News^{®}, Jinri Toutiao Lite^{®}, or the like |
| Recruitment | Boss Zhipin^{®}, 51job^{®}, or the like |
| ... | ... |

As can be learned from Table 1, the first application may include a social messaging-type application, for example, Phone, Messaging, WeChat^{®}, QQ^{®}, and the like. The first application may include a smart office-type application, for example, Tencent Meeting^{®}, DingTalk^{®}, Mail, Calendar, Memo, and the like. The first application may include a smart travel-type application, for example, Weather, Map, Umetrip^{®}, Flight Master^{®}, Gaotie Guanjia^{®}, and the like. The first application may include a news reading-type application, for example, Jinri Toutiao^{®}, Netease News^{®}, Jinri Toutiao Lite^{®}, and the like. The first application may include a recruitment-type application, for example, Boss Zhipin^{®}, 51job^{®}, and the like.

Certainly, the first application may further include more types of applications, and for example, may further include a game-type application, an audio and video-type application, a fashion and shopping-type application, a photography-type application, a financial-type application, a health and medicine-type application, and the like. This is not limited in this application. The game-type application and the audio and video-type application may both be considered to be entertainment-type applications.

602: The notification center of the first electronic device sends the first notification message of the first application to the super notification module of the first electronic device.

After receiving the first notification message of the first application, the notification center of the first electronic device may send the first notification message of the first application to the super notification module of the first electronic device.

Alternatively, after receiving the first notification message, the notification receiving module of the first electronic device may directly send the first notification message to the super notification module.

603: The super notification module of the first electronic device determines whether the first notification message of the first application is a super notification.

If determining that the first application is an application with super notifications allowed, the super notification module of the first electronic device may determine that the first notification message of the first application is a super notification.

The first electronic device may allow super notifications by default for an electronic device (for example, the second electronic device) that is in the same networking environment and that has passed system account authentication. That is, it is allowed to transfer a notification message corresponding to an application (for example, the first application) to other devices in the networking environment. In this way, the other devices (on which the application is not installed) may display the notification message of the application.

In a possible design, the user may set super notifications on the first electronic device in an application dimension and/or a device dimension.
(1) In the device dimension: The user turns on super notifications of the first electronic device.

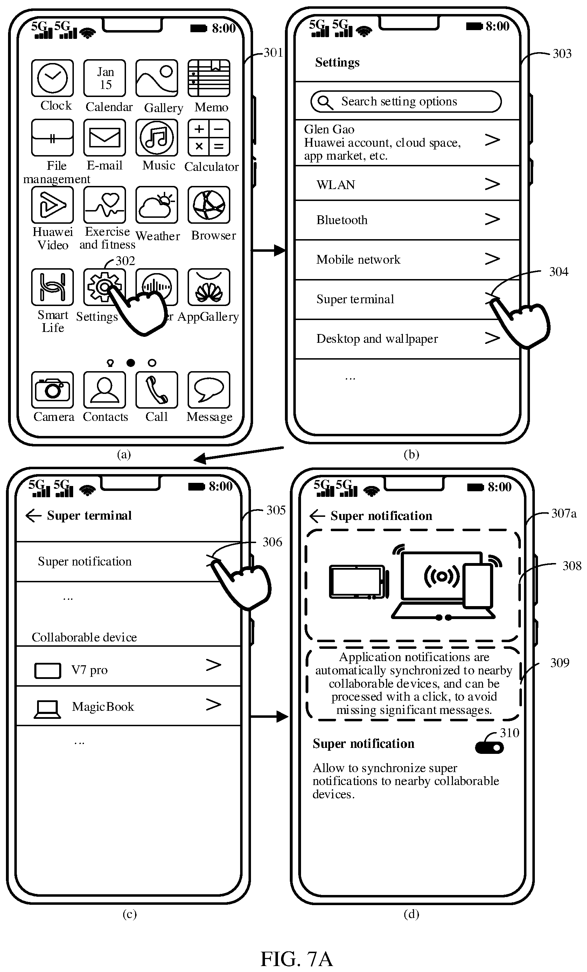

As shown in (a) in FIG. 7A, after a settings application 302 is opened in a main interface 301 of the mobile phone, a settings interface 303 shown in FIG. 7A (b) may be entered. In the settings interface 303, a plurality of setting options may be included, and for example, a personal account setting option (for example, Glen Gao), a WLAN setting option, a Bluetooth setting option, a mobile network setting option, a super terminal setting option 304, a desktop and wallpaper setting option, and the like may be included. In response to an operation of clicking a control 304 corresponding to the super terminal setting option by the user, as shown in (c) in FIG. 7A, the mobile phone may display a super terminal interface 305. In the super terminal interface 305, a super notification function option may be included. Information about nearby collaborable devices may further be included in the super terminal interface 305. For example, the collaborable devices may include a tablet computer V7 pro, a laptop computer MagicBook, and the like. In response to clicking a control 306 corresponding to "Super notification" by the user, as shown in (d) in FIG. 7A, the mobile phone may display a super notification interface 307a. In the super notification interface 307a, a prompt animation/prompt picture 308 and a prompt text 309 may be included. The prompt text 309 is used for prompting the user that a super notification function may implement that "Application notifications are automatically synchronized to the nearby collaborable devices, and can be processed with a click, to avoid missing significant messages." The prompt animation 308 is used for displaying a multi-device collaboration scenario to the user. In the super notification interface 307a, a switch (button) 310 corresponding to the super notification may further be included. The switch 310 may be turned on by default, indicating that the user agrees to turn on a super notification service/function, that is, agrees to synchronize (transfer) notification messages of all or some applications on the mobile phone to the nearby collaborable devices. Certainly, the user may turn off the switch 310. In this case, notifications of applications are no longer synchronized to the nearby collaborable devices.

In a possible design, if the switch 310 is turned on, notification messages of all the applications installed on the mobile phone may be synchronized to the nearby collaborable devices. That is, the first application may include all the applications installed on the mobile phone. In another possible design, if the switch 310 is turned on, notification messages of applications for which the user allows displaying of floating windows/allows message push among all the applications installed on the mobile phone may be synchronized to the nearby collaborable devices. That is, the first application may include the applications for which the user allows displaying of floating windows/allows message push among all the applications installed on the mobile phone.

(2) In the application dimension: The user may turn on super notifications of some applications installed on the first electronic device.

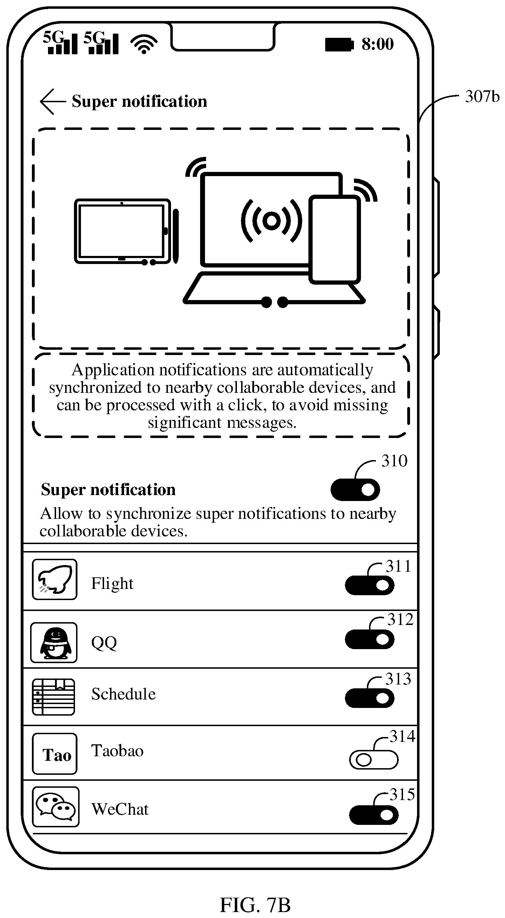

As shown in (c) in FIG. 7A, in response to clicking the control 306 corresponding to "Super notification" by the user, as shown in FIG. 7B, the mobile phone may display a super notification interface 307b. Compared with the super notification interface 307a in (d) in FIG. 7A, in the super notification interface 307b, switches corresponding to some applications installed on the first electronic device may further be included. For example, a switch 311 corresponding to Flight, a switch 312 corresponding to QQ^{®}, a switch 313 corresponding to Schedule, a switch 314 corresponding to Taobao^{®}, and a switch 315 corresponding to WeChat^{®}, and the like may be included. Applications displayed in the super notification interface 307b are sorted by default according to initial letters of names of the applications. Optionally, in response to a swipe operation of the user, switches corresponding to more applications may be displayed. The user may use corresponding switches to choose applications with super notifications allowed. In this way, notification messages of chosen applications may be synchronized to the nearby collaborable devices. For example, the user may choose switches corresponding to WeChat^{®}, QQ^{®}, Schedule, Flight, among other applications. That is, the first application may include WeChat^{®}, QQ^{®}, Schedule, Flight, among other applications. In this way, application notifications of WeChat^{®}, QQ^{®}, Schedule, Flight, among other applications may be synchronized to the nearby collaborable devices, so that the user can be kept from missing application notifications of WeChat^{®}, QQ^{®}, Schedule, and Flight.

In a possible design, an application whitelist may be preset in the super notification module, and applications in the application whitelist support super notifications. The applications in the application whitelist may be frequently used applications determined based on big data ranking. For example, the frequently used applications may be applications with a download count (for example, a download count calculated from application stores) being greater than or equal to a preset threshold. The application whitelist may be, for example, shown in the foregoing Table 1. When the user turns on a switch for transferring notifications across devices (when the switch 310 is turned on), switches corresponding to the applications in the whitelist may be automatically turned on, so that notification messages of the applications in the application whitelist may be synchronized to the nearby collaborable devices without manual configuration by the user, so that user experience can be improved.

Optionally, the application whitelist supports manual modification by the user. For example, the user may manually turn off a switch of an application whose super notifications are not desired by the user, and/or turn on switches of more applications whose super notifications are desired by the user.

In a possible design, based on operation information of the notification messages of the applications in the whitelist by the user, levels of interest of the notification messages of different applications may be determined. The operation information of the notification messages may include click information. The click information may refer to a quantity of clicks of notification messages of the application within a preset time (for example, the last 7 days, the last 14 days, or the last 30 days). Optionally, the operation information of the notification messages may further include a jump duration. The jump duration may refer to a running duration of the application after the user clicks the notification message to jump to the application (for example, an application A). It can be understood that, if the jump duration is excessively short (for example, less than 1s), it may be considered that the user clicks a corresponding notification message by mistake. An application notification sorting list that the user is interested in may be generated based on the click information and the jump duration. Weights occupied by the click information and the jump duration for generating the application notification sorting list may be different. The weight occupied by the click information may be greater than the weight occupied by the jump duration. For example, the weight occupied by the click information may be 80%, and the weight occupied by the jump duration may be 20%.

For example, notification messages clicked by the user within the last 7 days may include notification messages of Tencent Meeting^{®}, Umetrip^{®}, and Jinri Toutiao^{®}. Quantities of clicks, jump durations, and levels of interest of notification messages of different applications may be shown in Table 1-1.

**Table 1-1**

| Application | Quantity of clicks | Jump duration | Level of interest |
|---|---|---|---|
| Jinri Toutiao^{®} | 8 | 60 minutes | 1 |
| Tencent Meeting^{®} | 3 | 30 minutes | 2 |
| Umetrip^{®} | 2 | 5 minutes | 3 |

The level of interest may be identified by a number. When the number is larger, the level of interest is lower. Certainly, the level of interest may be identified in another manner, to distinguish between levels of interest of notification messages of different applications. This is not limited in this application.

The jump duration may be a total duration of jumping to an application after the user clicks a notification message within the last 7 days. For example, the user clicks notification messages of Umetrip^{®} twice within the last 7 days, and jump durations that respectively correspond to the two jumps are 2 minutes and 3 minutes. A total duration is 5 minutes.

(3) In the application and device dimensions: The user may set to turn on super notifications of some applications to some electronic devices (the laptop computer and/or the tablet computer).

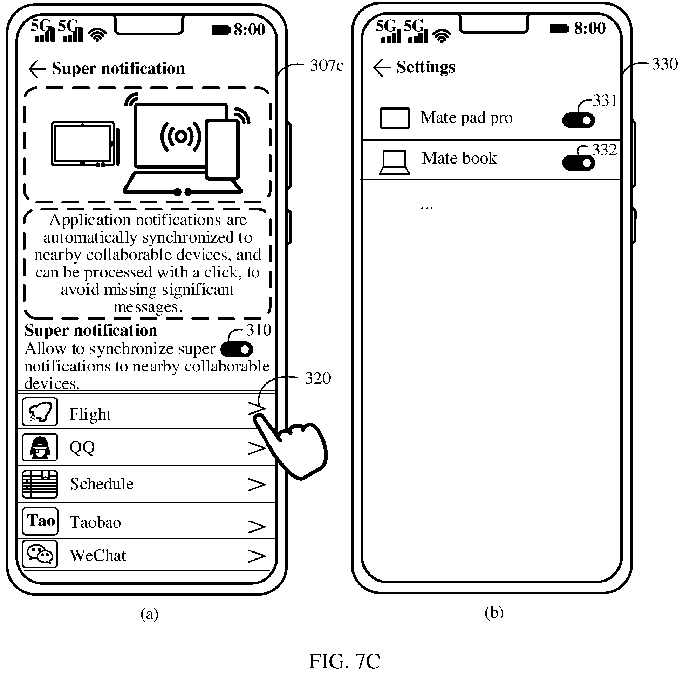

As shown in (c) in FIG. 7A, in response to clicking the control 306 corresponding to "Super notification" by the user, as shown in (a) in FIG. 7A, the mobile phone may display a super notification interface 307c. Compared with the super notification interface 307a in (d) in FIG. 7A, in the super notification interface 307c, controls corresponding to some applications installed on the first electronic device may be included. For example, a control 320 corresponding to WeChat^{®}, a control corresponding to QQ^{®}, a control corresponding to Schedule, a control corresponding to Flight, a control corresponding to Taobao^{®}, and the like may be included. Optionally, in response to a swipe operation of the user, controls corresponding to more applications may be displayed. In response to an operation of clicking the control 320 corresponding to WeChat^{®} by the user, as shown in (b) in FIG. 7C, the mobile phone may display a super notification setting interface 330 of the WeChat application, nearby collaborable devices (for example, the tablet computer V7 pro and the laptop computer MagicBook), switches (a switch 331 and a switch 332) corresponding to the devices, and the like may be included in the interface 330. The user may choose devices with super notifications of WeChat^{®} allowed. In this way, notification messages of the WeChat application may be synchronized to the chosen collaborable devices. For example, the user may choose the tablet computer V7 pro and the laptop computer MagicBook. In this way, application notifications of WeChat^{®} may be synchronized to the tablet computer V7 pro and the laptop computer MagicBook, so that the user can be kept from missing the application notifications of WeChat^{®}. That is, the first application may include WeChat^{®}. Referring to the foregoing setting manner, the user may set that super notifications of more applications (for example, QQ^{®}, Schedule, Flight, Taobao^{®}, or the like) are turned on to corresponding collaborable devices (for example, the laptop computer and/or the tablet computer). Details are not described herein again.

The nearby collaborable devices may be the second electronic device (for example, the tablet computer V7 pro and the laptop computer MagicBook) with super notifications turned on. For example, the user may turn on a switch corresponding to a super notification function in a settings application of the second electronic device. In this way, the user turns on the super notification function on the second electronic device, so that the second electronic device can receive notification messages of applications from the first electronic device.

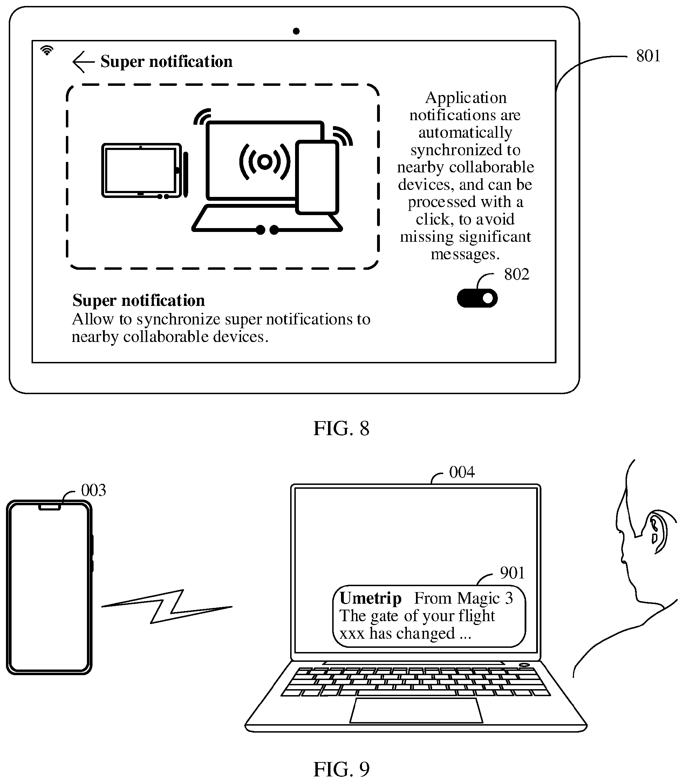

For example, assuming that the second electronic device is a tablet computer, as shown in FIG. 8, the user may enter a super notification function management interface 801 through a settings application of the tablet computer. The super notification function management interface 801 may include a switch 802. If the switch 802 is turned on, it indicates that the user agrees to turn on the super notification service/function. In this way, the tablet computer may be used as a collaborable device of the mobile phone, and may receive notification messages of applications from the mobile phone.

604: If the first notification message of the first application is a super notification, the super notification module of the first electronic device encapsulates the first notification message, and sends the encapsulated first notification message to the application handoff framework of the first electronic device.

For example, Table 2 shows examples of fields and content before and after the first notification message is encapsulated.

**Table 2**

| Fields before the first notification message is encapsulated | Example | Fields after the first notification message is encapsulated | Example |
|---|---|---|---|
| [Application name] | WeChat Are you going to run tonight | [Application name] | WeChat Are you going to run tonight Magic 3 |
| [Message text] | | [Message text] | |
| | | [Electronic device identifier] | |

As can be learned from Table 2, the first notification message before encapsulation may include fields such as the application name, the message text, and the like, and the first notification message after the encapsulation may include fields such as the application name, the message text, and the electronic device identifier. The electronic device identifier may be an identifier of an electronic device, and the super notification module of the first electronic device may add the field of the electronic device identifier to the first notification message, so that subsequently the second electronic device may prompt a device from which the first notification message comes to the user, that is, may prompt a source of the first notification message to the user.

Optionally, the fields of the first notification message before encapsulation are not limited to the example in Table 2, and may further include other fields. For example, when the first application is a social messaging-type application, the fields before the first notification message is encapsulated may further include a contact name and other fields. When the first application is a smart office-type application, the fields before the first notification message is encapsulated may further include a project name and other fields. When the first application is a smart travel-type application, the fields before the first notification message is encapsulated may further include a travel manner and other fields. This is not limited in this application.

605: The application handoff framework of the first electronic device sends the encapsulated first notification message to the application handoff framework of the second electronic device.

The application handoff framework of the first electronic device may send the first notification message of the first application to the application handoff framework of the second electronic device via short-range communication technologies.

The short-range communication technologies may include a Wi-Fi hotspot network, a Wi-Fi P2P network, a Bluetooth network, a Zigbee network, or an NFC network, and the like. This is not limited in this application.

The first electronic device may further send a second notification message of a second application to the second electronic device. For a specific process, refer to steps 601 to 605. Details are not described herein again.

606: The application handoff framework of the second electronic device sends the first notification message to the super notification module of the second electronic device.

The application handoff framework of the second electronic device may further send the second notification message to the super notification module of the second electronic device.

607: The super notification module of the second electronic device determines whether the second electronic device is in use, and determines whether the first application is installed/run on the second electronic device.

After receiving the first notification message, the super notification module of the second electronic device may determine whether the second electronic device is in use. For example, if the second electronic device is in a screen-on state, it may be considered that the second electronic device is in use. Alternatively, if the second electronic device is in a screen-on state and in an unlocked state, it may be considered that the second electronic device is in use. If the second electronic device is in a screen-off or screen-locked state, it may be considered that the second electronic device is not in use.

In some embodiments, if the second electronic device is in a screen-on state, it may be determined whether the first application corresponding to the first notification message is installed. If the first application is not installed on the second electronic device, subsequent steps (step 608, and the like) may be performed, that is, it is allowed to display the first notification message on the second electronic device. It can be understood that, when the second electronic device is in a screen-on state, it indicates that the user is using the second electronic device. In this case, the first notification message is displayed to the user, so that the user can view the message in time, to keep the user from missing significant notifications. If the first application is installed on the second electronic device, subsequent steps may no longer be performed, that is, the second electronic device may not parse the first notification message from the first electronic device. Because the first application is installed on the second electronic device, the first notification message of the first application may be received from the application server (the server corresponding to the first application). When the first notification message of the first application is received from the first electronic device, the first notification message may no longer be displayed, to keep the user from being bothered by repeated displaying.

In some other embodiments, if the second electronic device is in a screen-on state and the first application is installed on the second electronic device, it may be determined whether the first application is run (or logged in) on the first electronic device. If the first application is not run on the second electronic device, subsequent steps (step 608, and the like) may be performed, that is, it is allowed to display the first notification message on the second electronic device. If the first application is run (being run) on the second electronic device, subsequent steps may no longer be performed, that is, the second electronic device may not parse the first notification message from the first electronic device. Because the first application is run on the second electronic device, the first notification message of the first application may be received from the application server (the server corresponding to the first application). When the first notification message of the first application is received from the first electronic device again, the first notification message may no longer be displayed, to keep the user from being bothered by repeated displaying.

In still some other embodiments, if the second electronic device is in a screen-off or screen-locked state, the second electronic device may skip determining whether the first application is installed, and may skip performing a subsequent step (step 608, and the like). It can be understood that, when the second electronic device is in a screen-off or screen-locked state, it indicates that the user is not using the second electronic device. In this case, the user may fail to view the displayed first notification message in time, and therefore it is not necessary to perform subsequent steps to display the first notification message.

Optionally, the super notification module of the second electronic device may intelligently filter out insignificant notifications (for example, advertising marketing, ongoing notifications, or the like). For example, the super notification module may filter out insignificant notifications based on keywords and/or notification channels. For example, if the super notification module detects that content of a notification message includes keywords such as a fraud or sales call number, or detects that content of a notification message includes keywords such as a swindle-type uniform resource locator (uniform resource locator, URL), the notification message may be intelligently filtered out (deleted). The super notification module may skip sending insignificant notifications to the notification arrival reminder module of the second electronic device, so that the second electronic device skips displaying insignificant notifications, to avoid disturbing the user.

608: The super notification module of the second electronic device decapsulates the first notification message, and sends the decapsulated first notification message to the notification arrival reminder module of the second electronic device.

The super notification module of the second electronic device may obtain fields such as an application name, a message text, an electronic device identifier, and the like by decapsulating the first notification message. Next, the fields such as the application name, the message text, the electronic device identifier, and the like may be sent to the notification arrival reminder module.

609: The notification arrival reminder module of the second electronic device displays the first notification message of the first application.

The notification arrival reminder module of the second electronic device may display a banner notification/prompt box (pop-up window/pop-up box) at the top/bottom of a current interface (an interface displayed when the second electronic device receives the first notification message of the first application). The banner notification/prompt box may include fields such as an application name, a message text, an electronic device identifier, and the like. In this way, even if the first application is not installed/run on the second electronic device, the user may still view the first notification message of the first application on the second electronic device, to keep the user from missing the first notification message of the first application. Optionally, when displaying the first notification message of the first application, the notification arrival reminder module of the second electronic device may further remind the user in a vibration manner, a sound manner, or another manner. A level of vibration and a volume and a ringtone of the sound may be based on corresponding settings of the second electronic device. This is not limited in this application.

For example, the first electronic device may be a mobile phone, a name of the mobile phone may be Magic 3, and the second electronic device may be a laptop computer. If the mobile phone and the laptop computer have completed networking and authentication and the user sets on the mobile phone to allow the first application (for example, Umetrip) to send super notifications to the laptop computer, the mobile phone and the laptop computer may transfer notification messages of the first application. If the first application is Umetrip, when the mobile phone receives a notification message of Umetrip, as shown in FIG. 9, a mobile phone 003 may send a notification message of Umetrip to a laptop computer 004. If Umetrip is not installed/run on the laptop computer 004 and the laptop computer 004 is in use (the user is using the laptop computer for office), the laptop computer 004 may display a prompt box 901. The prompt box 901 may include a name of Umetrip, a device (for example, Magic 3) from which the notification message comes, and a text of the notification message. The text may be, for example, "The gate of your flight xxx has changed ...".

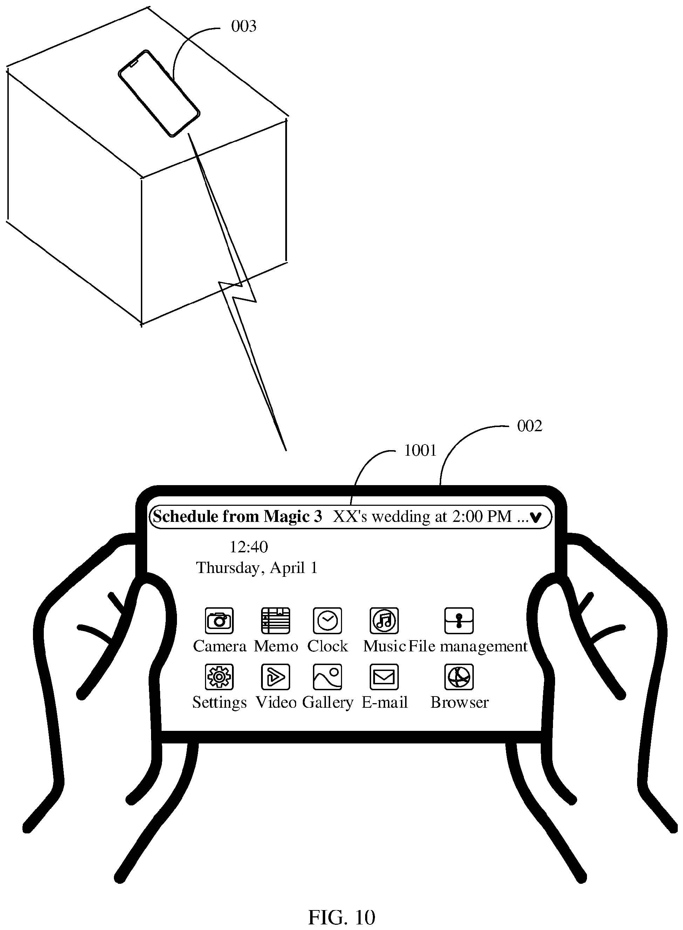

In another example, the first electronic device may be a mobile phone, a name of the mobile phone may be Magic 3, and the second electronic device may be a tablet computer. If the mobile phone and the tablet computer have completed networking and authentication and the user sets on the mobile phone to allow the first application (for example, Schedule) to send super notifications to the tablet computer, the mobile phone and the tablet computer may transfer notification messages of the first application. If the first application is Schedule, when the mobile phone receives a notification message of Schedule, as shown in FIG. 10, a mobile phone 003 may send a notification message of the Schedule application to a tablet computer 002. If the Schedule application is not installed/run on the tablet computer 002 and the tablet computer 002 is in use (for example, the tablet computer 002 is in a screen-on state), the tablet computer 002 may display a banner notification 1001. The banner notification 1001 includes a name of the Schedule application, a device (for example, Magic 3) from which the notification message comes, and a message text of the notification message. The message text may be, for example, "XX's wedding at 2:00 PM".

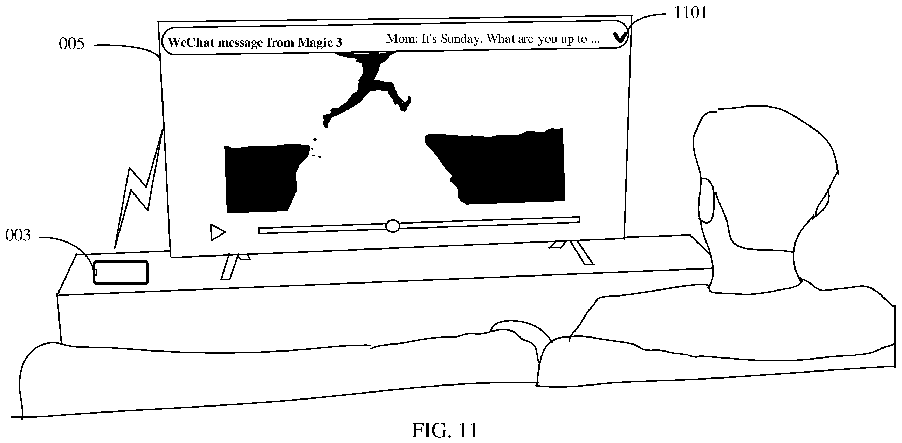

In another example, the first electronic device may be a mobile phone, and the second electronic device may be a television. If the mobile phone and the television have completed networking and authentication and the user sets on the mobile phone that the first application (for example, Honor of Kings^{®}) is allowed to send super notifications to the television, the mobile phone and the television transfer notification messages of the application (the first application). When the mobile phone receives a notification message of Honor of Kings^{®}, as shown in FIG. 11, the mobile phone 003 may send the notification message of Honor of Kings^{®} to a television 005. If Honor of Kings^{®} is not installed/run on the television 005 and the television is in use (for example, when the user watches movies, TV dramas, or other video content at a television end), the television may display a banner notification 1101. The banner notification 1101 may include a name of Honor of Kings^{®}, a device (for example, Magic 3) from which the notification message comes, and a message text of the notification message. The message text may be, for example, "Your friend comes online ...".

In a possible design, when the second electronic device is in a screen projection mode and an immersive mode (a do-not-disturb mode and a game mode), the banner notification may not be performed, and super notifications are directly received in the notification center.

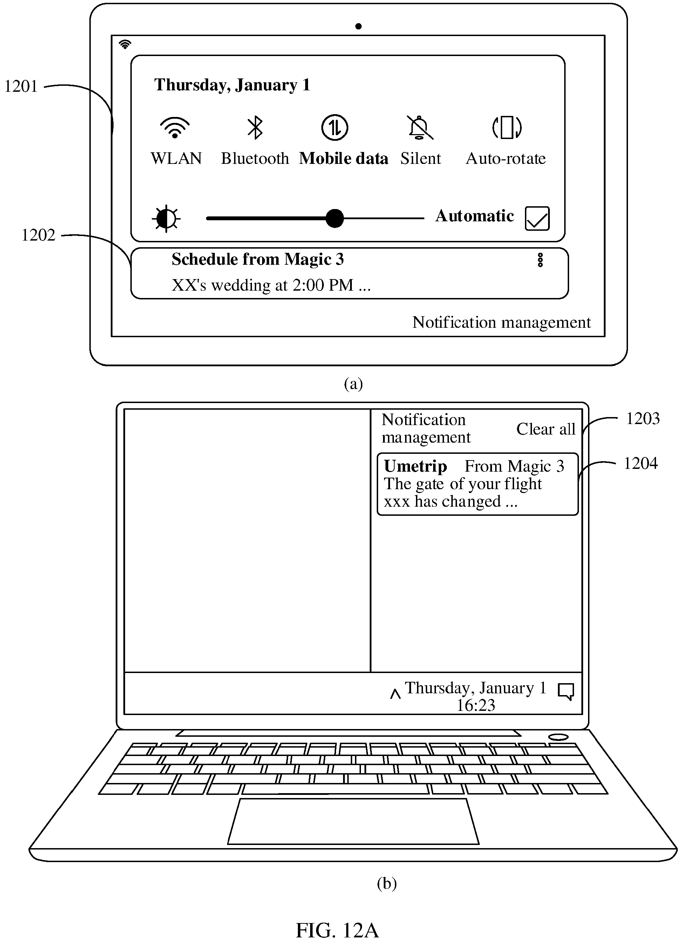

For example, if the second electronic device is a tablet computer, as shown in (a) in FIG. 12A, a notification message 1202 from the first application (for example, Schedule) of the first electronic device (for example, Magic 3) may be displayed on a pull-down notification interface 1201. If the second electronic device is a laptop computer, as shown in (b) in FIG. 12A, a notification message 1204 from the first application (for example, Umetrip) of the first electronic device (for example, Magic 3) may be displayed in a notification management interface 1203.

Optionally, the method provided in the embodiments of this application may further include the following steps:

610: In response to an operation on a banner notification or prompt box by a user, the notification arrival reminder module of the second electronic device sends the first notification message to a local processing module of the second electronic device.

The second electronic device may perform local processing on the first notification message. For example, in response to an operation of swiping a banner notification or prompt box (to the left or right) by the user, the local processing module of the second electronic device may mark the first notification message as a read state.

The second electronic device may perform step 610, or the second electronic device may perform step 611 to step 613.

611: If the user has not performed an operation on the banner notification or prompt box, the notification arrival reminder module of the second electronic device may send the first notification message to the notification center of the second electronic device.

If the user fails to perform an operation on the banner notification or prompt box in time (for example, within 3s), it may be considered that currently it is not convenient for the user to process the notification message, the first notification message may be sent to the notification center of the second electronic device for convenience of subsequent viewing and processing by the user.

A super notification message and a local notification message in the notification center of the second electronic device may be displayed in categories. For the super notification message, a device source may be labeled on a notification card for ease of distinguishing from the local notification message.

In the embodiments of this application, the notification center of the second electronic device may further include the second notification message from the second application of the first electronic device. The second application is an application with super notifications allowed. In a transfer process of the second notification message, refer to the related description (steps 601 to 610) of the transfer process of the first notification message. Details are not described herein again.

The notification center of the second electronic device may determine whether application types corresponding to the first notification message and the second notification message match a device tag of the second electronic device. The device tag of the second electronic device is used for indicating a major use of the second electronic device. The device tag of the second electronic device may include at least one of learning, work, entertainment, sports, socializing, or leisure.

For example, when the second electronic device is a laptop computer, the laptop computer is mainly used for office, and the device tag of the laptop computer is office. When the second electronic device is a tablet computer, the tablet computer is mainly used for playing games, and the device tag of the tablet computer is entertainment. When the second electronic device is a television (for example, a smart screen), a major use of the television is to watch movies or TV dramas, and the device tag of the television may be entertainment. When the second electronic device is a smart watch, the smart watch is mainly used for sports and health monitoring. The device tag of the smart watch may be sports. Certainly, the second electronic device may correspond to one device tag, or may correspond to a plurality of device tags. That is, the second electronic device is a multi-use electronic device.

In a possible design, the device tag of the second electronic device may be determined based on at least one of a use duration or a use frequency of an application on the second electronic device. For example, when the second electronic device is a laptop computer, an office-type application on the laptop computer has a long use duration and a high use frequency. For example, the device tag of the laptop computer may be considered to be office if a use duration and a use frequency of the office-type application on the laptop computer within a preset time (for example, the last 7 days, the last 14 days, the last 30 days, the last half year, or the like) respectively exceed a first value and a second value that are preset. If the device tag of the laptop computer may be considered to be office and entertainment if a use duration and a use frequency of an office-type application and an audio and video-type application (that is, an entertainment-type application) on the laptop computer within a preset time (for example, the last 7 days, the last 14 days, the last 30 days, the last half year, or the like) respectively exceed a first value and a second value that are preset.

In a possible design, the super notification module may intelligently learn the device tag of the second electronic device. The super notification module of the second electronic device may match at least one notification message from the first electronic device against the device tag of the second electronic device, and determine a priority of each notification message based on a matching result. For example, it is assumed that the first electronic device is a mobile phone, and the second electronic device is a laptop computer/a tablet computer. The super notification module of the laptop computer/the tablet computer may match a notification message from the mobile phone against the device tag of the laptop computer/the tablet computer, and respectively determine whether application types corresponding to the first notification message and the second notification message match the device tag of the second electronic device. If the application type corresponding to the first notification message matches the device tag of the second electronic device, it may be considered that the first notification message corresponds to a first priority. If the application type corresponding to the second notification message does not match the device tag of the second electronic device, it may be considered that the second notification message corresponds to a second priority. The first priority is higher than the second priority. Subsequently, the super notification module may send the content of the notification message (the first notification message and the second notification message) and priority information of the notification message to the notification arrival reminder module. The notification arrival reminder module of the laptop computer/the tablet computer may display the banner notification on the interface of the mobile phone based on the content of the notification message and the priority information. For example, the notification arrival reminder module may display a notification message with a higher priority in a more eye-grabbing manner (for example, the banner notification has a larger font size, a display position is closer to the center). If the user fails to process the banner notification (for example, does not click the banner notification) in time, the notification arrival reminder module of the laptop computer/the tablet computer may send the content of the notification message and the priority information of the notification message to the notification center (that is, the notification message corresponding to the banner notification is received in the notification center). The content of the notification message from the mobile phone may be displayed on the notification center based on the priority information of the notification message. The priority of displaying the first notification message is higher than that of displaying the second notification message. For example, the first notification message may be displayed above (in front of) the second notification message. Because the first notification message matches the device tag of the second electronic device and the second notification message does not match the device tag of the second electronic device, it may be learned that a user is more inclined to view the first notification message rather than the second notification message when using the second electronic device. Therefore, the displaying the first notification message with a high priority better conforms to use habits of the user using the second electronic device, and fits requirements of the user, so that user experience can be improved.

In some embodiments, if the application type corresponding to the first notification message matches the device tag of the second electronic device, it may be considered that the first notification message corresponds to the first priority. If the application type corresponding to the second notification message does not match the device tag of the second electronic device, it may be considered that the second notification message corresponds to the second priority. The first priority is higher than the second priority. That is, the second electronic device may display the first notification message with a high priority and display the second notification message with a low priority in the notification center.

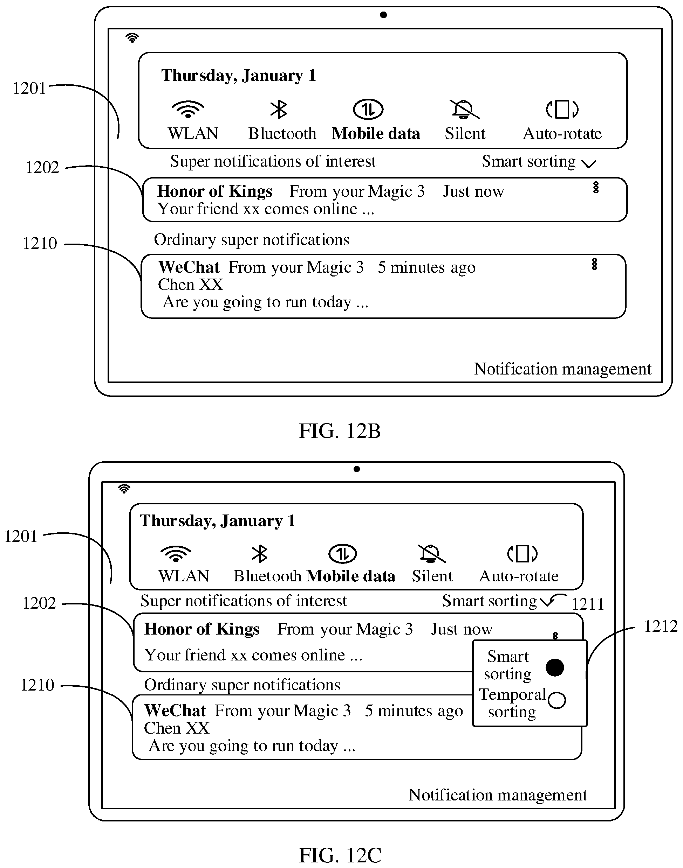

For example, the second electronic device is a tablet computer. If the user receives a super notification (a notification message from the mobile phone) while using the tablet computer, the super notification module of the tablet computer may determine whether a type of an application corresponding to a notification message matches the device tag of the second electronic device, display a notification message that matches the device tag of the second electronic device with a high priority, and display a notification message that does not match the device tag of the second electronic device with a low priority. As shown in FIG. 12B, the tablet computer may display a notification message 1202 from a game application (for example, Honor of Kings^{®}) and a notification message 1210 from WeChat^{®} of the mobile phone (Magic 3) in the pull-down notification interface 1201. Assuming that the device tag of the tablet computer is entertainment, if the tablet computer determines that the notification message of Honor of Kings^{®} matches the device tag of the tablet computer, the notification message 1202 of Honor of Kings^{®} may be displayed in a super notification of interest. If the notification message of WeChat^{®} does not match the device tag of the tablet computer, the notification message 1210 of WeChat^{®} may be displayed in a common super notification. A priority of the super notification of interest is higher than that of the common super notification. A display position of the super notification of interest is closer to the front and more distinct compared with a display position of the common super notification.

It may be understood that the super notification of interest and the common super notification are an example of distinguishing between priorities of notification messages. The second electronic device may reflect priorities of different notification messages in another manner. For example, the second electronic device may display a notification message with a high priority above or in front of a notification message with a low priority, to make the notification message with a high priority more eye-grabbing.

In addition, the user may also adjust a display rule of super notifications, and the display rule of super notifications may include smart sorting and temporal sorting. In the smart sorting, super notifications may be displayed based on matching results of the super notifications against the device tag of the second electronic device. In the temporal sorting, super notifications are sorted in a time order of receiving the super notifications by the second electronic device.

For example, as shown in FIG. 12C, in response to an operation of clicking a control 1211 by the user, the tablet computer may pop up a pop-up box 1212. The pop-up box 1212 may include a smart sorting option and a temporal sorting option. Currently, smart sorting is the default option. The user may make an adjustment according to a requirement of the user.

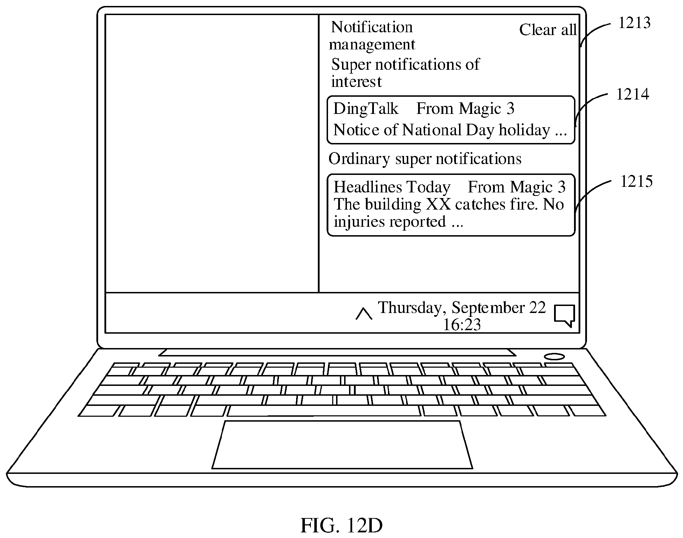

In another example, the second electronic device is a laptop computer. As shown in FIG. 12D, the laptop computer may display a notification message 1214 from an office application (for example, DingTalk^{®}) of the mobile phone and a notification message 1215 from a news-type application (for example, Jinri Toutiao^{®}) of the mobile phone in a notification interface 1213. Assuming that the device tag of the laptop computer is work (office), if the notification message of DingTalk^{®} matches the device tag of the laptop computer, the notification message 1214 of DingTalk^{®} may be displayed in the super notification of interest. If the notification message of Jinri Toutiao^{®} does not match the device tag of the laptop computer, the notification message 1215 of Jinri Toutiao^{®} may be displayed in a common super notification. A priority of the super notification of interest is higher than that of the common super notification. A display position of the super notification of interest is closer to the front and more distinct compared with a display position of the common super notification.

In a possible design, if the first notification message and the second notification message both match the device tag of the second electronic device, the second electronic device is further configured to: determine a display order of the first notification message and the second notification message based on levels of interest of the first notification message and the second notification message, and display the first notification message with the first priority and display the second notification message with the second priority if the level of interest of the first notification message is higher than the level of interest of the second notification message, where the first priority is higher than the second priority. That is, the first notification message is displayed before the second notification message.

In a possible design, if the first notification message and the second notification message both match the device tag of the second electronic device, the second electronic device is further configured to display the first notification message and the second notification message according to a time order of receiving the first notification message and the second notification message.

In a possible design, if the first notification message and the second notification message both match the device tag of the second electronic device and the level of interest of the first notification message is the same as the level of interest of the second notification message, the second electronic device is further configured to display the first notification message and the second notification message according to a time order of receiving the first notification message and the second notification message.

In a possible design, a priority of a super notification may be determined according to a current use scenario of the second electronic device. The use scenario of the second electronic device includes at least one of a work scenario, a home scenario, and an outdoor scenario. If a first super notification (the first notification message of the first application of the first electronic device) matches the current use scenario of the second electronic device, the first super notification is displayed with the first priority. If a second super notification (the second notification message of the second application of the first electronic device) does not match the current use scenario of the second electronic device, the second super notification is displayed with the second priority. The first priority is higher than the second priority. A display position of the first notification message is closer to the front and more distinct compared with a display position of the second notification message.

In a possible design, a priority of a super notification may be determined based on a use time period of the second electronic device. The use time period of the second electronic device includes a work time period and a rest time period. The work time period may be 9 AM to 8 PM on a work day, and the rest time period may be 8 PM to 12 PM on a work day. The work time period may be obtained according to a pattern of using office software by the user. This is not limited in this application. If the use time period of the second electronic device is the work time period, if an application corresponding to the first super notification (the first notification message of the first application of the first electronic device) is an office application, the first super notification is displayed with the first priority. If an application corresponding to the second super notification (the second notification message of the second application of the first electronic device) is not an office application, the first super notification is displayed with the second priority. The first priority is higher than the second priority. A display position of the first notification message is closer to the front and more distinct compared with a display position of the second notification message.

In a possible design, priorities of super notifications may be sorted in combination with habit and preference data of using the second electronic device by a device owner. For example, when the second electronic device is a tablet computer, the priorities of the notification messages may be sorted according to the following rule: frequent contacts>topics of interest>system notifications>common contacts>routine push notifications of applications. That is, priorities of notification messages of frequent contacts are higher than priorities of notification messages related to topics that the user is interested in, the priorities of notification messages related to topics that the user is interested in are higher than priorities of system notifications (for example, notification messages of the settings application), the priorities of system notifications are higher than priorities of notification messages of common contacts, and the priorities of notification messages of common contacts are higher than priorities of routine push notifications of applications.

In another example, when the second electronic device is a television (a smart screen), because the smart screen is a common device, contact messages transferred from other devices may not be displayed. When other non-contact notifications are received, the smart screen may sort the priorities of the notification messages according to the following rule: topics of interest>system notifications>routine push notifications of applications. That is, priorities of notification messages related to topics that the user is interested in are higher than priorities of system notifications (for example, notification messages of the settings application), and the priorities of system notifications are higher than priorities of routine push notifications of applications.

612: In response to an operation on the first notification message in the notification center, the notification center of the second electronic device sends the first notification message to a local processing module of the second electronic device.

The second electronic device may perform local processing on the first notification message. For example, in response to an operation (a first operation) of swiping the first notification message (to the left or right) in the notification center by the user, the local processing module of the second electronic device may mark the first notification message as a read state.

In another example, the user may perform an operation (a second operation) of clicking the banner notification or the notification bar corresponding to the notification message of the first application, and in response to the operation of the user, the local processing module of the second electronic device may start (pull up) a screen projection window of the first application. Display content in the screen projection window of the first application is equivalent to display content in a window that is of the first application and is displayed by the mobile phone after the user clicks the banner notification on the mobile phone. The display content in the screen projection window of the first application may be received by the application handoff framework of the second electronic device from the application handoff framework of the first electronic device. The user may make a reply in a screen projection window of the second electronic device.

613: The notification center of the second electronic device updates a state of the first notification message.

For example, if the first notification message is in a read state, the notification center of the second electronic device may delete the first notification message from the notification center.

614: The local processing module of the second electronic device sends a processing result to the application handoff framework of the second electronic device.

For example, the processing result may be that the first notification message is marked as a read state. Further, the processing result may further include content (a text, a picture, a video, or the like) returned by the user.

615: The application handoff framework of the second electronic device sends the processing result to the application handoff framework of the first electronic device.

616: The application handoff framework of the first electronic device sends the processing result to the notification center of the first electronic device.

617: The notification center of the first electronic device updates the state of the first notification message based on the processing result.

Because the first notification message is in a read state, the notification center of the first electronic device may delete the first notification message from the notification center in time, to keep the user from being bothered by continuous reminding. Further, the first electronic device may synchronize the content returned by the user in the first application for ease of viewing by the user.

The state of the second notification message may be updated by referring to a process of updating the state of the first notification message in steps 612 to 617. Details are not described herein again.

Based on the method provided in the embodiments of this application, when the first electronic device determines that the notification message (for example, the first notification message of the first application) of the application conforms to a trigger condition of a super notification function (that is, the user sets that it is allowed to transfer the notification message of the first application to the second electronic device), the notification message of the application may be transmitted to the second electronic device via short-range communication technologies. In this way, the user can view and process message notifications conveniently between different devices, to keep the user from missing important application notifications.

In addition, when the first electronic device (for example, the mobile phone) determines that it is allowed to transfer the notification message (for example, the first notification message of the first application and the second notification message of the second application) of the application to the second electronic device (the laptop computer or the tablet computer), the notification message of the application may be transmitted to the laptop computer or the tablet computer via short-range communication technologies. The content of the notification message from the mobile phone may be displayed on the laptop computer or the tablet computer based on the priority information of the notification message. In this way, the user can view a notification message of an application on a source end (for example, the mobile phone) in time. This conforms to the use habits of the user using the second electronic device, and better fits the requirements of the user, so that the user experience can be improved.

In addition, when the first electronic device (a source device) turns on the do-not-disturb mode (that is, notification messages are no longer displayed in a banner, and may be directly received in the pull-down notification bar interface) or is not in use (for example, in a screen-off or screen-locked state), the transfer (sending) of the first notification message of the first application received by the first electronic device to another device (the second electronic device) in the networking environment is not affected.

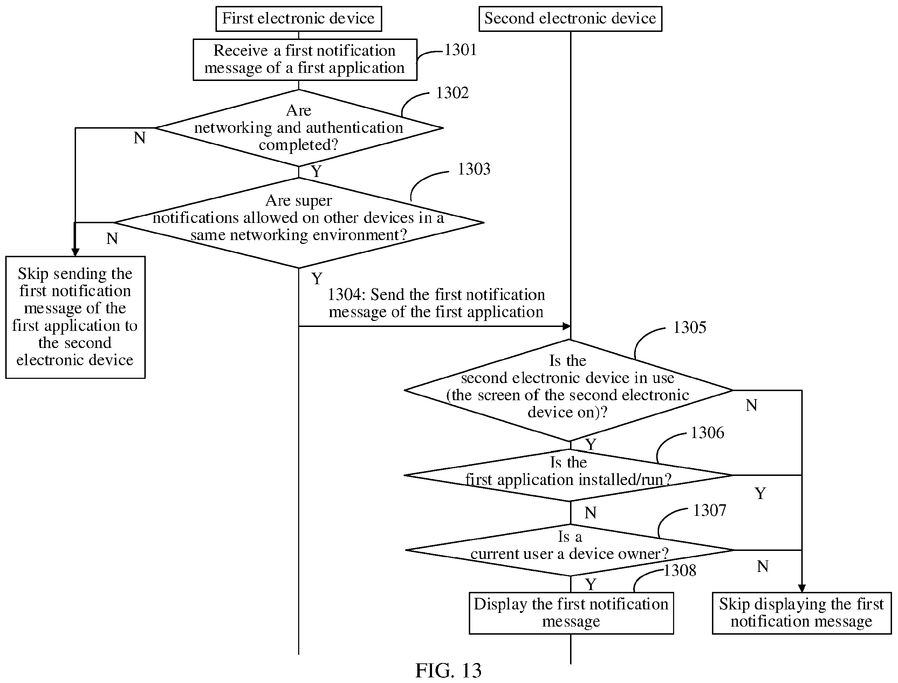

As shown in FIG. 13, an embodiment of this application provides a notification message processing method. Notification message transfer performed between a first electronic device and a second electronic device is used as an example for description. The first electronic device is a source device, and for example, may be a mobile phone. The second electronic device is a peer device, and for example, may be a laptop computer or a tablet computer. The method includes the following steps.

1301: The first electronic device receives a first notification message of a first application.

For related descriptions, refer to step 601. Details are not described herein again.

1302: The first electronic device determines whether networking and authentication are completed.

For related descriptions of networking and authentication, refer to the descriptions in the embodiment shown in FIG. 2.

For example, the first electronic device (for example, the electronic device 002 in FIG. 1) and the second electronic device (for example, the electronic device 003 or the electronic device 004 in FIG. 1) may both connected to a same Wi-Fi hotspot, and system authentication accounts of the first electronic device and the second electronic device are the same. In this case, it may be considered that the first electronic device and the second electronic device complete networking and authentication. The first electronic device determines that networking and authentication are completed, and may perform step 1303, or otherwise the second electronic device skips sending the first notification message of the first application to the second electronic device.

1303: The first electronic device determines whether super notifications are allowed on other devices in a same networking environment.

The first electronic device may allow super notifications by default for another authenticated device (for example, the second electronic device) in the same networking environment. That is, it is allowed to transfer a notification message corresponding to an application (for example, the first application) to other devices in the networking environment. In this way, the other devices (on which the application is not installed) may display the notification message of the application.

For a process of setting super notifications by a user, refer to step 603.

It is to be noted that, there is no necessary order of execution between step 1302 and step 1303, and the order of execution between the steps is not specifically limited in this embodiment.

The first electronic device determines that super notifications are allowed on other devices in the same networking environment, and may perform step 1304, that is, send the first notification message of the first application to the second electronic device. Otherwise, the first electronic device skips sending the first notification message of the first application to the second electronic device.

1304: If the first electronic device and the second electronic device have completed networking and authentication and super notifications are allowed on the second electronic device, the first electronic device sends the first notification message of the first application to the second electronic device.

The first electronic device may send the first notification message of the first application to the second electronic device via short-range communication technologies. The short-range communication technologies may include a Wi-Fi hotspot network, a Wi-Fi P2P network, a Bluetooth network, a Zigbee network, or an NFC network, and the like. This is not limited in this application.

1305: The second electronic device determines whether the second electronic device is in use.

After receiving the first notification message of the first application, the second electronic device may determine whether the second electronic device is in use.

In a possible design, if the second electronic device is in a screen-on state, it may be considered that the second electronic device is in use. If the second electronic device is in a screen-off or screen-locked state, it may be considered that the second electronic device is not in use.

If it is determined that the second electronic device is not in use (in a screen-off state), the second electronic device may skip displaying the first notification message. If it is determined that the second electronic device is in use, step 1306 may continue to be performed.

1306: The second electronic device determines whether the first application is installed/run.

In some embodiments, the second electronic device determines whether the first application is installed on the second electronic device. If the first application is not installed on the second electronic device, step 1307 may continue to be performed. If the first application is installed on the second electronic device, the second electronic device may skip displaying the first notification message from the first electronic device.

In some other embodiments, if the second electronic device determines that the first application is installed on the second electronic device, the second electronic device further determines whether the first application is run on the second electronic device. If the first application is not run on the second electronic device, step 1307 may continue to be performed. If the first application is run on the second electronic device, the second electronic device may skip displaying the first notification message from the first electronic device.

Alternatively, in a possible design, when it is determined that the second electronic device is in use and the first application is not installed on the second electronic device (or the first application is installed but not run on the second electronic device), step 1307 may continue to be performed.

1307: The second electronic device recognizes whether a current user is a device owner.

The second electronic device may perform device owner recognition in the following manners: Manner 1: The second electronic device may turn on a front-facing camera to acquire human face information of the current user to perform human face recognition. Manner 2: The second electronic device may turn on a fingerprint acquisition module to acquire fingerprint information of the current user to perform fingerprint recognition. Certainly, the second electronic device may further perform device owner recognition in another manner. This is not limited in this application. If the current user is the device owner, step 1308 may be performed. If the current user is not the device owner, the second electronic device may skip displaying the first notification message from the first electronic device.

1308: The second electronic device displays the first notification message.

In a possible design, when it is determined that the second electronic device is in use and the first application is not installed on the second electronic device (or the first application is installed but not run on the second electronic device), how to display the first notification message may be further determined in combination with the device owner recognition result.

The device owner recognition result includes the following three cases: (1) The current user is the device owner. (2) It is indefinite whether the current user is the device owner (the current user may be the device owner). (3) The current user is not the device owner.

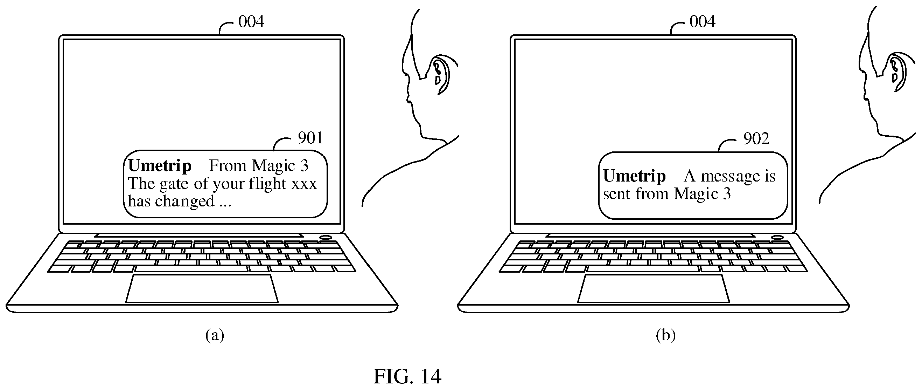

In a first case, the current user is the device owner. In this case, the second electronic device may display a banner notification/prompt box in a current interface (an interface displayed when the second electronic device receives the first notification message of the first application). The banner notification/prompt box includes message content of the first notification message of the first application. The message content of the first notification message may include an application name, an electronic device identifier (an identifier of the first electronic device), and a text (specific content) of the first notification message, so that the user can view the first notification message of the first application on the second electronic device in time, to keep the user from missing the first notification message. As shown in (a) in FIG. 14, when it is recognized that the current user is the device owner, the second electronic device (the laptop computer 004) may display a prompt box 901. The prompt box 901 is used for prompting the first notification message from the first application. For example, if the first application is Umetrip, the prompt box 901 may include a name of Umetrip, a device (for example, Magic 3) from which the notification message comes, and a text of the notification message. The text may be, for example, "The gate of your flight xxx has changed ...".

In a second case, a device owner recognition function is not accurate (for example, the device owner recognition result is not accurate in a dark environment), and it cannot be determined whether the current user is the device owner. Alternatively, the electronic device recognizes a plurality of users, and one of the users is the device owner. In this case, the second electronic device may display a banner notification/prompt box in a current interface. The banner notification/prompt box includes message content of the first notification message of the first application. The message content of the first notification message may include an application name and an electronic device identifier (an identifier of the first electronic device) but hides a text (specific content) of the first notification message, to protect the privacy of the device owner as much as possible. As shown in (b) in FIG. 14, when it cannot be determined that the current user is the device owner, the second electronic device (the laptop computer 004) may display a prompt box 902. The prompt box 902 is used for prompting the first notification message from the first application. For example, if the first application is Umetrip, the prompt box 901 may include a name of Umetrip and a device (for example, Magic 3) from which the notification message comes, a text of the first notification message is hidden, and only a prompt text like "A message is sent from" is displayed.

Optionally, when displaying the first notification message of the first application, the second electronic device may further remind the user in a vibration manner, a sound manner, or another manner. A level of vibration and a volume and a ringtone of the sound may be based on corresponding settings of the second electronic device. This is not limited in this application.

In a third case, the current user is not the device owner. In this case, the second electronic device does not display the first notification message of the first application, to avoid leakage of the privacy of the device owner.

Optionally, the user may further choose to make a message reply on the second electronic device. For example, the user may click the banner notification or the notification bar corresponding to the notification message of the first application, and the second electronic device may display a screen projection window of the first application. Display content in the screen projection window of the first application is equivalent to that in a window that is of the first application and is displayed by the mobile phone after the user clicks the banner notification on the mobile phone. The user may make a reply in a screen projection window of the second electronic device.

In addition, when the user makes a message reply, if a time from the last device owner recognition exceeds a preset duration (for example, 5 minutes), the second electronic device may perform device owner recognition again to verify the identity of the current user to protect the privacy of the device owner.

If the user has not performed an operation on the banner notification or prompt box corresponding to the first notification message, the second electronic device may receive the first notification message in the notification center. The second electronic device may further receive a second notification message from a second application of the first electronic device in the notification center. The second application is an application with super notifications allowed. The second electronic device may determine whether application types corresponding to the first notification message and the second notification message match a device tag of the second electronic device.

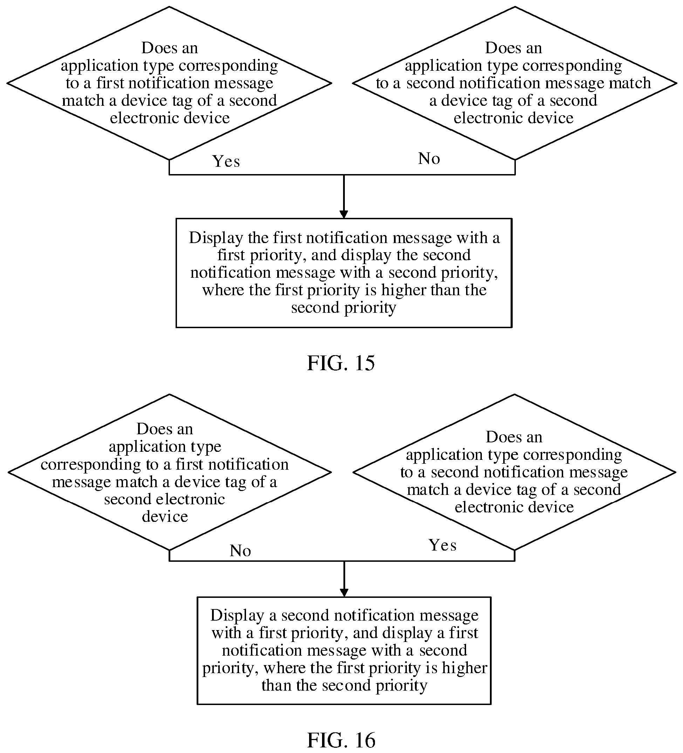

As shown in FIG. 15, if the application type corresponding to the first notification message matches the device tag of the second electronic device and the application type corresponding to the second notification message does not match the device tag of the second electronic device, the second electronic device displays the first notification message with a first priority and displays the second notification message with a second priority. The first priority is higher than the second priority.

As shown in FIG. 16, if the application type corresponding to the first notification message does not match the device tag of the second electronic device and the application type corresponding to the second notification message matches the device tag of the second electronic device, the second electronic device displays the second notification message with the first priority and displays the first notification message with the second priority. The first priority is higher than the second priority.

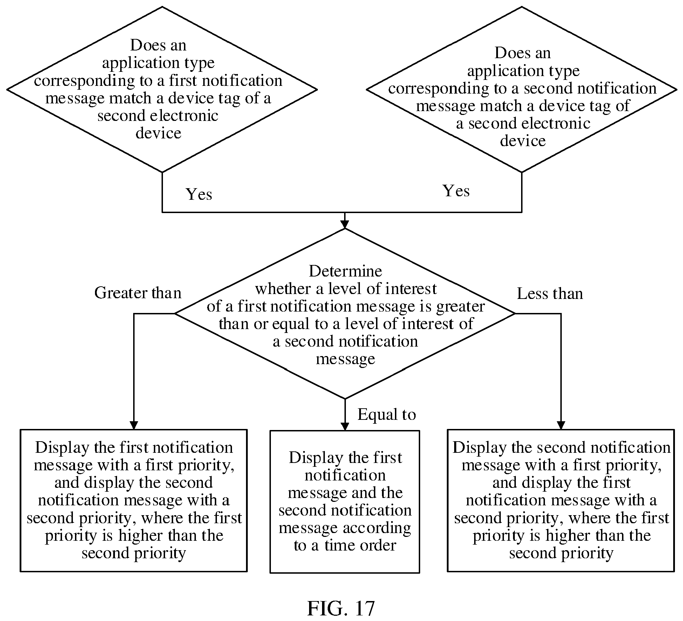

As shown in FIG. 17, if the first notification message and the second notification message both match the device tag of the second electronic device and a level of interest of the first notification message is the same as a level of interest of the second notification message, the second electronic device is further configured to determine whether the level of interest of the first notification message is greater than (higher than) or equal to the level of interest of the second notification message. If the level of interest of the first notification message is greater than the level of interest of the second notification message, the first notification message is displayed with the first priority, and the second notification message is displayed with the second priority, where the first priority is higher than the second priority. If the level of interest of the first notification message is equal to the level of interest of the second notification message (that is, the level of interest of the first notification message is the same as the level of interest of the second notification message), the first notification message and the second notification message are displayed according to a time order. If the level of interest of the first notification message is less than (lower than) the level of interest of the second notification message, the second notification message is displayed with the first priority, and the first notification message is displayed with the second priority, where the first priority is higher than the second priority.

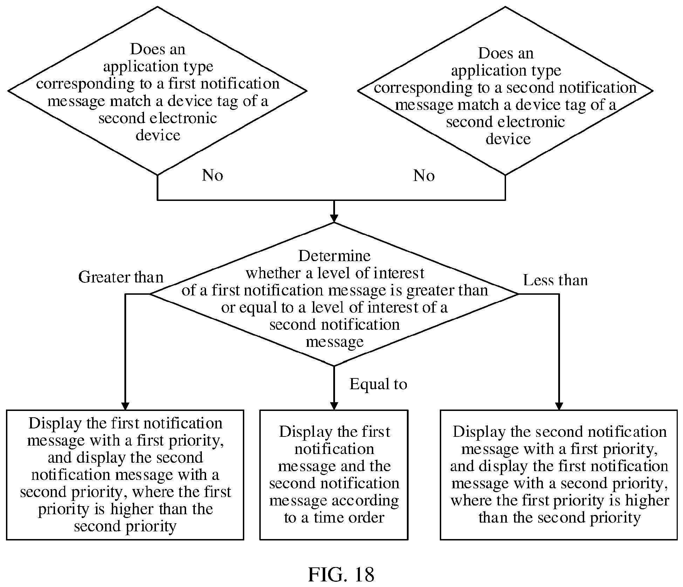

As shown in FIG. 18, if neither of the first notification message and the second notification message matches the device tag of the second electronic device and a level of interest of the first notification message is the same as a level of interest of the second notification message, the second electronic device is further configured to determine whether the level of interest of the first notification message is greater than (higher than) or equal to the level of interest of the second notification message. If the level of interest of the first notification message is greater than the level of interest of the second notification message, the first notification message is displayed with the first priority, and the second notification message is displayed with the second priority, where the first priority is higher than the second priority. If the level of interest of the first notification message is equal to the level of interest of the second notification message (that is, the level of interest of the first notification message is the same as the level of interest of the second notification message), the first notification message and the second notification message are displayed according to a time order. If the level of interest of the first notification message is less than (lower than) the level of interest of the second notification message, the second notification message is displayed with the first priority, and the first notification message is displayed with the second priority, where the first priority is higher than the second priority.

In a possible design, a priority of a super notification may be determined according to a current use scenario of the second electronic device. In a possible design, a priority of a super notification may be determined based on a use time period of the second electronic device. In a possible design, priorities of super notifications may be sorted in combination with habit and preference data of using the second electronic device by a device owner. For a specific process, refer to related descriptions above. Details are not described herein.

In some embodiments, if the user has not performed an operation on the banner notification or prompt box corresponding to the first notification message, the second electronic device may receive the first notification message in the notification center. The second electronic device may further receive the second notification message from the second application of the first electronic device in the notification center. The second application is an application with super notifications allowed. The second electronic device may respectively determine levels of interest corresponding to the first notification message and the second notification message.

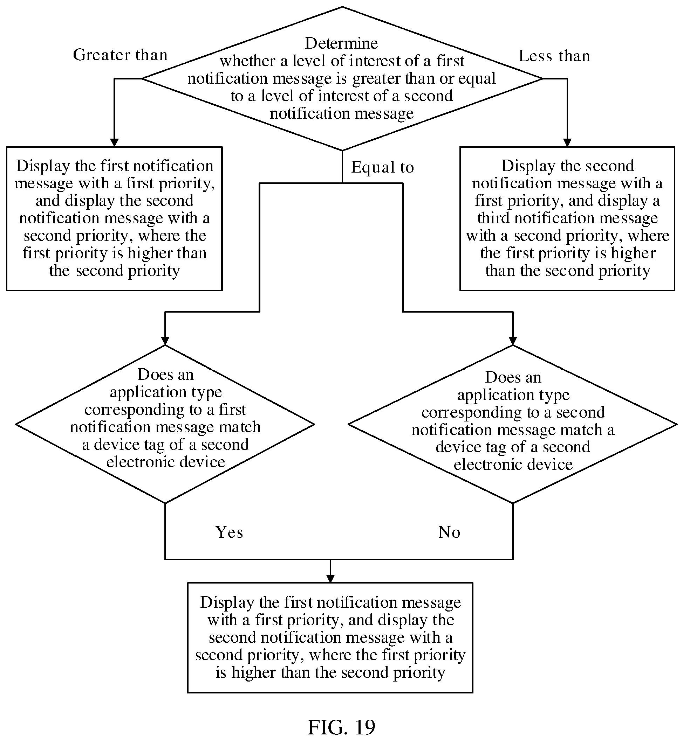

In a possible design, as shown in FIG. 19, if the level of interest of the first notification message is higher than (greater than) the level of interest of the second notification message, the first notification message is displayed with the first priority, and the second notification message is displayed with the second priority, where the first priority is higher than the second priority. If the level of interest of the first notification message is lower than (less than) the level of interest of the second notification message, the second notification message is displayed with the first priority, and the first notification message is displayed with the second priority, where the first priority is higher than the second priority. If the level of interest of the first notification message is equal to the level of interest of the second notification message (that is, the level of interest of the first notification message is the same as the level of interest of the second notification message), the second electronic device may determine whether application types corresponding to the first notification message and the second notification message match a device tag of the second electronic device. If the application type corresponding to the first notification message matches the device tag of the second electronic device and the application type corresponding to the second notification message does not match the device tag of the second electronic device, the second electronic device displays the first notification message with the first priority and displays the second notification message with the second priority. The first priority is higher than the second priority.

It can be understood that, when the level of interest of the first notification message is the same as the level of interest of the second notification message, if the application type corresponding to the first notification message does not match the device tag of the second electronic device and the application type corresponding to the second notification message matches the device tag of the second electronic device, the second electronic device displays the second notification message with the first priority and displays the first notification message with the second priority. The first priority is higher than the second priority. If the first notification message and the second notification message both match or neither of the first notification message and the second notification message matches the device tag of the second electronic device, the second electronic device may display the first notification message and the second notification message according to a time order.

Based on the method provided in the embodiments of this application, the first notification message is displayed with the first priority and the second notification message is displayed with the second priority if the level of interest of the first notification message is higher than the level of interest of the second notification message, where the first priority is higher than the second priority. Because the priority of displaying the first notification message is higher than that of displaying the second notification message, the first notification message may be displayed above (in front of) the second notification message. Because the level of interest corresponding to the first notification message is higher than the level of interest of the second electronic device, when using the second electronic device, a user can view notification messages that the user is more interested in on a source device (the first electronic device), to keep the user from missing important messages of the source device, and better fit requirements of the user, so that user experience can be improved.

Based on the method provided in the embodiments of this application, when an application notification received by the first electronic device conforms to a trigger condition of a super notification function (that is, the first electronic device has completed networking and authentication and super notifications are allowed on the second electronic device in the networking environment), the application notification may be transmitted to the second electronic device via short-range communication technologies. In this way, the user can view and process message notifications conveniently between different devices, to keep the user from missing important application notifications.

In addition, when the first electronic device (for example, the mobile phone) determines that it is allowed to transfer the notification message (for example, the first notification message of the first application and the second notification message of the second application) of the application to the second electronic device (the laptop computer or the tablet computer), the notification message of the application may be transmitted to the laptop computer or the tablet computer via short-range communication technologies. The content of the notification message from the mobile phone may be displayed on the laptop computer or the tablet computer based on the priority information of the notification message. In this way, the user can view a notification message of an application on a source end (for example, the mobile phone) in time. This conforms to the use habits of the user using the second electronic device, and better fits the requirements of the user, so that the user experience can be improved.

In addition, when the first electronic device (a source device) turns on the do-not-disturb mode (that is, notification messages are no longer displayed in a banner, and may be directly received in the pull-down notification bar interface) or is not in use (for example, in a screen-off or screen-locked state), the transfer (sending) of the first notification message of the first application received by the first electronic device to another device (the second electronic device) in the networking environment is not affected.

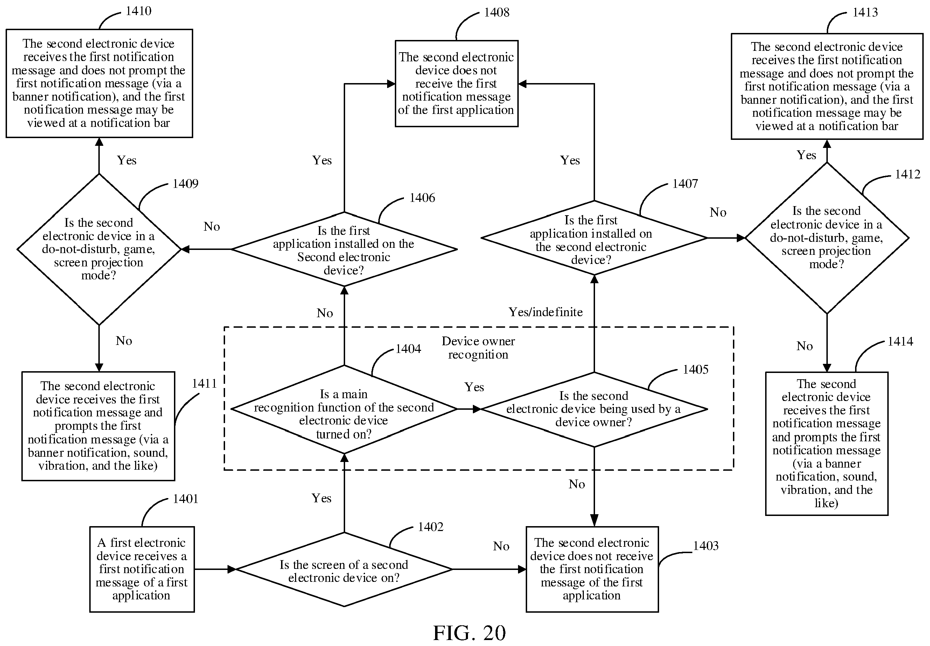

As shown in FIG. 20, another embodiment of this application provides a notification message processing method. Notification message transfer performed between a first electronic device and a second electronic device is used as an example for description. The first electronic device is a source device, and for example, may be a mobile phone. The second electronic device is a peer device, and for example, may be a laptop computer or a tablet computer. The method includes the following steps.

1401: The first electronic device receives a first notification message of a first application.

For related descriptions, refer to step 601. Details are not described herein again.

1402: Determine whether the screen of the second electronic device is on.

If the second electronic device is in a screen-on state, it may be considered that the second electronic device is in use, and step 1404 may be performed. If the second electronic device is in a screen-off (non-screen-on state), it may be considered that the second electronic device is not in use, and step 1403 may be performed.

1403: The second electronic device does not receive the first notification message of the first application.

Alternatively, the second electronic device may receive the first notification message of the first application, but does not prompt the first notification message (does not prompt the first notification message through a banner notification/pop-up window or notification bar).

1404: Determine whether a main recognition function of the second electronic device is turned on.

The second electronic device may turn on a device owner recognition function by default, or may receive an operation of a user to turn on the device owner recognition function (for example, the user may turn on the device owner recognition function through a settings application). If the second electronic device turns on the device owner recognition function, and may perform step 1405. If the second electronic device does not turn on the device owner recognition function, step 1406 may be performed.

It can be understood that, if the device owner recognition function is turned on, the second electronic device may acquire information of the user in a screen-on period and compare the information of the user with information of a device owner (for example, may turn on a camera to acquire a human face image, and compare the human face image with a human face image entered in the second electronic device by the user (the device owner)), to determine whether a user currently using the second electronic device (watching the screen of the second electronic device) is the device owner.

1405: The second electronic device recognizes whether a current user is a device owner (that is, whether the second electronic device is currently used by the device owner).

The second electronic device may perform device owner recognition in the following manners: Manner 1: The second electronic device may turn on a front-facing camera to acquire human face information of the current user to perform human face recognition. Manner 2: The second electronic device may turn on a fingerprint acquisition module to acquire fingerprint information of the current user to perform fingerprint recognition. Certainly, the second electronic device may further perform device owner recognition in another manner. This is not limited in this application. A device owner recognition result includes the following three cases: (1) The current user is the device owner. (2) It is indefinite whether the current user is the device owner. (3) The current user is not the device owner.

In a first case, the current user is the device owner, the second electronic device may perform step 1407. In a second case, the device owner recognition function encounters an error, and it cannot be determined whether the current user is the device owner, and the second electronic device may perform step 1407. In a third case, the current user is not the device owner. The second electronic device may perform step 1403.

1406: Determine whether the first application is installed on the second electronic device.

When the device owner recognition function of the second electronic device is not turned on, if the first application is installed (or installed and run) on the second electronic device, step 1408 may be performed, and if the first application is not installed (or installed but not run) on the second electronic device, step 1409 may be performed.

1407: Determine whether the first application installed on the second electronic device.

When the second electronic device recognizes that the second electronic device is being used by the device owner or cannot determine whether the second electronic device is being used by the device owner, if the first application is installed (or installed and run) on the second electronic device, step 1408 may be performed, and if the first application is not installed (or installed but not run) on the second electronic device, step 1412 may be performed.

1408: The second electronic device does not receive the first notification message of the first application.

Alternatively, the second electronic device may receive the first notification message of the first application, but does not prompt the first notification message (does not prompt the first notification message through a banner notification/pop-up window or notification bar).

1409: Determine whether the second electronic device is in a do-not-disturb, game, screen projection mode.

When the device owner recognition function of the second electronic device is not turned on and the first application is installed (or installed and run) on the second electronic device, if the second electronic device is in the do-not-disturb, game, screen projection mode, step 1410 may be performed. If the second electronic device is not in the do-not-disturb, game, screen projection mode, step 1411 may be performed.

1410: The second electronic device receives the first notification message and does not prompt the first notification message (via a banner notification/pop-up window), and the first notification message may be viewed at a notification bar.

1411: The second electronic device receives the first notification message and prompts the first notification message (via a banner notification, sound, vibration, and the like).

In a possible design, the second electronic device may display a banner notification/prompt box in a current interface. The banner notification/prompt box includes message content of the first notification message of the first application. The message content of the first notification message may include an application name, an electronic device identifier (an identifier of the first electronic device), and a text (specific content) of the first notification message.

In another possible design, because the device owner recognition function is not turned on, it cannot be determined whether the current user is the device owner, and the second electronic device may display a banner notification/prompt box in a current interface. The banner notification/prompt box includes message content of the first notification message of the first application. The message content of the first notification message may include an application name and an electronic device identifier (an identifier of the first electronic device) but hides a text (specific content) of the first notification message, to protect the privacy of the device owner as much as possible. As shown in (b) in FIG. 14, when it cannot be determined that the current user is the device owner, the second electronic device (the laptop computer 004) may display a prompt box 902. The prompt box 902 is used for prompting the first notification message from the first application. For example, if the first application is Umetrip, the prompt box 901 may include a name of Umetrip and a device (for example, Magic 3) from which the notification message comes, a text of the first notification message is hidden, and only a prompt text like "A message is sent from" is displayed.

1412: Determine whether the second electronic device is in a do-not-disturb, game, screen projection mode.

When the second electronic device recognizes that the second electronic device is being used by the device owner or cannot determine whether the second electronic device is being used by the device owner and the first application is installed (or installed and run) on the second electronic device, if the second electronic device is in the do-not-disturb, game, screen projection mode, step 1413 may be performed. If the second electronic device is not in the do-not-disturb, game, screen projection mode, step 1414 may be performed.

1413: The second electronic device receives the first notification message and does not prompt the first notification message (via a banner notification), and the first notification message may be viewed at a notification bar.

1414: The second electronic device receives the first notification message and prompts the first notification message (via a banner notification, sound, vibration, and the like).

In a possible design, when it is determined that the current user is the device owner, the second electronic device may display a banner notification/prompt box in a current interface (an interface displayed when the second electronic device receives the first notification message of the first application). The banner notification/prompt box includes message content of the first notification message of the first application. The message content of the first notification message may include an application name, an electronic device identifier (an identifier of the first electronic device), and a text (specific content) of the first notification message, so that the user (the device owner) can view the first notification message of the first application on the second electronic device in time, to keep the user from missing the first notification message. As shown in (a) in FIG. 14, when it is recognized that the current user is the device owner, the second electronic device (the laptop computer 004) may display a prompt box 901. The prompt box 901 is used for prompting the first notification message from the first application. For example, if the first application is Umetrip, the prompt box 901 may include a name of Umetrip, a device (for example, Magic 3) from which the notification message comes, and a text of the notification message. The text may be, for example, "The gate of your flight xxx has changed ...".

In another possible design, when it cannot be determined whether the current user is the device owner, the second electronic device may display a banner notification/prompt box in a current interface. The banner notification/prompt box includes message content of the first notification message of the first application. The message content of the first notification message may include an application name and an electronic device identifier (an identifier of the first electronic device) but hides a text (specific content) of the first notification message, to protect the privacy of the device owner as much as possible. As shown in (b) in FIG. 14, when it cannot be determined that the current user is the device owner, the second electronic device (the laptop computer 004) may display a prompt box 902. The prompt box 902 is used for prompting the first notification message from the first application. For example, if the first application is Umetrip, the prompt box 901 may include a name of Umetrip and a device (for example, Magic 3) from which the notification message comes, a text of the first notification message is hidden, and only a prompt text like "A message is sent from" is displayed.

Further, if the user has not performed an operation on the banner notification or prompt box corresponding to the first notification message, the second electronic device may receive the first notification message in the notification center. The second electronic device may further receive a second notification message from a second application of the first electronic device in the notification center. The second application is an application with super notifications allowed.

The second electronic device determines whether application types corresponding to the first notification message and the second notification message match a device tag of the second electronic device. If the application type corresponding to the first notification message matches the device tag of the second electronic device, it may be considered that the first notification message corresponds to a first priority. If the application type corresponding to the second notification message does not match the device tag of the second electronic device, it may be considered that the second notification message corresponds to a second priority. The first priority is higher than the second priority. That is, the second electronic device may display the first notification message with a high priority and display the second notification message with a low priority in the notification center.

In a possible design, if the first notification message and the second notification message both match the device tag of the second electronic device, the second electronic device is further configured to: determine a display order of the first notification message and the second notification message based on levels of interest of the first notification message and the second notification message, where if the level of interest of the first notification message is higher than the level of interest of the second notification message, the first notification message is displayed before the second notification message.

In a possible design, if the first notification message and the second notification message both match the device tag of the second electronic device, the second electronic device is further configured to display the first notification message and the second notification message according to a time order of receiving the first notification message and the second notification message.

In a possible design, if the first notification message and the second notification message both match the device tag of the second electronic device and the level of interest of the first notification message is the same as the level of interest of the second notification message, the second electronic device is further configured to display the first notification message and the second notification message according to a time order of receiving the first notification message and the second notification message.

In a possible design, a priority of a super notification may be determined according to a current use scenario of the second electronic device. In a possible design, a priority of a super notification may be determined based on a use time period of the second electronic device. In a possible design, priorities of super notifications may be sorted in combination with habit and preference data of using the second electronic device by a device owner. For a specific process, refer to related descriptions above. Details are not described herein.

In some embodiments, if the user has not performed an operation on the banner notification or prompt box corresponding to the first notification message, the second electronic device may receive the first notification message in the notification center. The second electronic device may further receive a second notification message from a second application of the first electronic device in the notification center. The second application is an application with super notifications allowed. The second electronic device may respectively determine levels of interest corresponding to the first notification message and the second notification message.

In a possible design, as shown in FIG. 20, if the level of interest of the first notification message is higher than (greater than) the level of interest of the second notification message, the first notification message is displayed with the first priority, and the second notification message is displayed with the second priority, where the first priority is higher than the second priority. If the level of interest of the first notification message is lower than (less than) the level of interest of the second notification message, the second notification message is displayed with the first priority, and the first notification message is displayed with the second priority, where the first priority is higher than the second priority. If the level of interest of the first notification message is equal to the level of interest of the second notification message (that is, the level of interest of the first notification message is the same as the level of interest of the second notification message), the second electronic device may determine whether application types corresponding to the first notification message and the second notification message match a device tag of the second electronic device. If the application type corresponding to the first notification message matches the device tag of the second electronic device and the application type corresponding to the second notification message does not match the device tag of the second electronic device, the second electronic device displays the first notification message with the first priority and displays the second notification message with the second priority. The first priority is higher than the second priority.

It can be understood that, when the level of interest of the first notification message is the same as the level of interest of the second notification message, if the application type corresponding to the first notification message does not match the device tag of the second electronic device and the application type corresponding to the second notification message matches the device tag of the second electronic device, the second electronic device displays the second notification message with the first priority and displays the first notification message with the second priority. The first priority is higher than the second priority. If the first notification message and the second notification message both match or neither of the first notification message and the second notification message matches the device tag of the second electronic device, the second electronic device may display the first notification message and the second notification message according to a time order.

Based on the method provided in the embodiments of this application, when the first electronic device receives the first notification message of the first application, the first notification message of the first application is transmitted to the second electronic device. In this way, the user can view and process message notifications conveniently between different devices, to keep the user from missing important application notifications.

In addition, when the first electronic device (for example, the mobile phone) determines that it is allowed to transfer the notification message (for example, the first notification message of the first application and the second notification message of the second application) of the application to the second electronic device (the laptop computer or the tablet computer), the notification message of the application may be transmitted to the laptop computer or the tablet computer via short-range communication technologies. The content of the notification message from the mobile phone may be displayed on the laptop computer or the tablet computer based on the priority information of the notification message. In this way, the user can view a notification message of an application on a source end (for example, the mobile phone) in time. This conforms to the use habits of the user using the second electronic device, and better fits the requirements of the user, so that the user experience can be improved.

Embodiments of this application further provide a computer-readable storage medium. The computer-readable storage medium includes computer instructions. The computer instructions, when run on an electronic device (for example, the electronic device 100 shown in FIG. 3), cause the electronic device 100 to perform all of the functions or steps performed by the mobile phone, the tablet computer or the laptop computer in the foregoing method embodiments.

Embodiments of this application further provide a computer program product. When the computer program product runs on a computer, the computer is enabled to perform the functions or steps performed by the electronic device in the foregoing method embodiments.

Embodiments of this application further provide a processing apparatus, which can be divided into different logical units or modules according to functions, and each unit or module performs a different function, so that the processing apparatus performs the various functions or steps performed by the electronic device or the wearable device in the foregoing method embodiments.

Through the foregoing descriptions about implementations, a person skilled in the art may clearly understand that, the foregoing functions may be allocated to different functional modules and implemented based on a requirement. To be specific, an inner structure of an apparatus is divided into different functional modules to implement all or some functions described above.

In the several embodiments provided in this application, it is to be understood that the disclosed apparatus and method may be implemented in other manners. For example, the described apparatus embodiment is merely exemplary. For example, the module or unit division is merely a logical function division and may be other division during actual implementations. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed in multiple different places. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in the embodiments of this application. The storage medium includes: any medium that can store program code, such as a USB flash drive, a removable hard disk, a read only memory (read only memory, ROM), a random access memory (random access memory, RAM), a magnetic disk, or a compact disc.

## Claims

1. A notification message processing system, the notification message processing system being a communication system comprising a first electronic device (003) and a second electronic device, the first electronic device (002) and the second electronic device logging in to a same user account, wherein
the first electronic device is configured to receive a first notification message (1202) of a first application and a second notification message (1210) of a second application;
the first electronic device is further configured to send the first notification message and the second notification message to the second electronic device;
if the second electronic device meets a preset condition, the second electronic device is configured to determine whether application types corresponding to the first notification message and the second notification message match a device tag of the second electronic device, wherein the device tag is used for indicating a major use of the second electronic device corresponding to an application type, wherein the device tag of the second electronic device is determined based on at least one of a use duration or a use frequency of an application on the second electronic device; and
if the application type corresponding to the first notification message matches the device tag of the second electronic device, the second electronic device is configured to display the first notification message with a first priority; if the application type corresponding to the second notification message does not match the device tag of the second electronic device, the second electronic device is configured to display the second notification message with a second priority; and the first priority is higher than the second priority.

2. The system according to claim 1, wherein
the preset condition comprises that the first application is not installed on the second electronic device (002) or the first application is installed but not run and the second application is not installed on the second electronic device or the second application is installed but not run.

3. The system according to claim 1, wherein
the device tag of the second electronic device (002) comprises at least one of learning, work, entertainment, sports, socializing, or leisure.

4. The system according to any one of claims 1 to 3, wherein the first electronic device (003) is further configured to:
obtain first information and second information, wherein the first information comprises a click frequency of a notification message of the first application within a preset time period and a duration for jumping to an interface of the first application after the notification message of the first application is clicked; and the second information comprises a click frequency of a notification message of the second application within a preset time period and a duration for jumping to an interface of the second application after the notification message of the second application is clicked; and
determine levels of interest of the first notification message (1202) and the second notification message (1210) based on the first information and the second information; and
that the first electronic device is configured to send the first notification message and the second notification message to the second electronic device comprises:
the first electronic device is configured to: send the first notification message and the level of interest of the first notification message to the second electronic device, and send the second notification message and the level of interest of the second notification message to the second electronic device.

5. The system according to claim 4, wherein if the first notification message (1202) and the second notification message (1210) both match the device tag of the second electronic device (002), the second electronic device is further configured to:
determine a display order of the first notification message (1202) and the second notification message (1210) based on the levels of interest of the first notification message and the second notification message, and display the first notification message with the first priority and display the second notification message with the second priority if the level of interest of the first notification message is higher than the level of interest of the second notification message, wherein the first priority is higher than the second priority.

6. A notification message processing method, applied to a second electronic device (002), a first electronic device (003) and the second electronic device (002) logging in to a same user account, the method comprising:
receiving, by the second electronic device (002), a first notification message (1202) of a first application and a second notification message (1210) of a second application from the first electronic device;
if the second electronic device (002) meets a preset condition, determining, by the second electronic device, whether application types corresponding to the first notification message (1202) and the second notification message (1210) match a device tag of the second electronic device (002), wherein the device tag is used for indicating a major use of the second electronic device corresponding to an application type, wherein the device tag of the second electronic device is determined based on at least one of a use duration or a use frequency of an application on the second electronic device (002); and
if the application type corresponding to the first notification message matches the device tag of the second electronic device, displaying, by the second electronic device, the first notification message with a first priority; and if the application type corresponding to the second notification message does not match the device tag of the second electronic device, displaying, by the second electronic device, the second notification message with a second priority, wherein the first priority is higher than the second priority.

7. The method according to claim 6, wherein
the preset condition comprises that the first application is not installed on the second electronic device (002) or the first application is installed but not run and the second application is not installed on the second electronic device or the second application is installed but not run.

8. The method according to claim 6, wherein
the device tag of the second electronic device (002) comprises at least one of learning, work, entertainment, sports, socializing, or leisure.

9. The method according to claim 6, wherein
if the first notification message (1202) and the second notification message (1210) both match the device tag of the second electronic device (002), determining, by the second electronic device, a display order of the first notification message and the second notification message based on a level of interest of the first notification message and a level of interest of the second notification message, and
displaying the first notification message with the first priority and displaying the second notification message with the second priority if the level of interest of the first notification message is higher than the level of interest of the second notification message, wherein the first priority is higher than the second priority;
wherein the level of interest of the first notification message is determined based on a first information and the level of interest of the second notification message is determined based on a second information, wherein the first information comprises a click frequency of a notification message of the first application within a preset time period and a duration for jumping to an interface of the first application after the notification message of the first application is clicked, and the second information comprises a click frequency of a notification message of the second application within a preset time period and a duration for jumping to an interface of the second application after the notification message of the second application is clicked.

10. The method according to any one of claims 6 to 9, wherein
if the first notification message (1202) and the second notification message (1210) both match the device tag of the second electronic device (002), displaying, by the second electronic device, the first notification message and the second notification message according to a time order of receiving the first notification message and the second notification message.

11. The method according to claim 9, wherein
if the first notification message (1202) and the second notification message (1210) both match the device tag of the second electronic device (002) and the level of interest of the first notification message is the same as the level of interest of the second notification message, displaying, by the second electronic device, the first notification message and the second notification message according to a time order of receiving the first notification message and the second notification message.

12. The method according to any one of claims 6 to 11, further comprising:
filtering out, by the second electronic device (002), an insignificant notification message, wherein the insignificant notification message comprises at least one of an advertising marketing notification or a fraud notification.

13. A second electronic device (002), wherein the second electronic device comprises a display (194), a processor (110), and a memory (121); the memory stores program instructions; and the processor is configured to run the program instructions stored in the memory, to cause the second electronic device to perform all the steps of the method according to any one of claims 6 to 12.

## Patentansprüche

1. Ein Benachrichtigungsnachrichten-Verarbeitungssystem, wobei das Benachrichtigungsnachrichten-Verarbeitungssystem ein Kommunikationssystem ist, das ein erstes elektronisches Gerät (003) und ein zweites elektronisches Gerät umfasst, wobei sich das erste elektronische Gerät (002) und das zweite elektronische Gerät beim selben Benutzerkonto anmelden, wobei
das erste elektronische Gerät so konfiguriert ist, dass es eine erste Benachrichtigungsnachricht (1202) einer ersten Anwendung und eine zweite Benachrichtigungsnachricht (1210) einer zweiten Anwendung empfängt;
das erste elektronische Gerät ist weiter konfiguriert, die erste Benachrichtigungsnachricht und die zweite Benachrichtigungsnachricht an das zweite elektronische Gerät zu senden;
wenn das zweite elektronische Gerät eine vorgegebene Bedingung erfüllt, ist das zweite elektronische Gerät so konfiguriert, zu bestimmen, ob Anwendungstypen, die den ersten und zweiten Benachrichtigungsnachrichten entsprechen, einem Gerätetag des zweiten elektronischen Geräts entsprechen, wobei der Gerätetag dazu dient, eine Hauptnutzung des zweiten elektronischen Geräts entsprechend einem Anwendungstyp anzuzeigen, wobei der Gerätetag des zweiten elektronischen Geräts auf mindestens einer der Nutzungsdauer oder Nutzungshäufigkeit einer Anwendung auf dem zweiten elektronischen Gerät basiert; und
wenn der Anwendungstyp, der der ersten Benachrichtigungsnachricht entspricht, dem Gerätetag des zweiten elektronischen Gerätes entspricht, ist das zweite elektronische Gerät so konfiguriert, die erste Benachrichtigungsnachricht mit einer ersten Priorität anzuzeigen; wenn der Anwendungstyp, der der zweiten Benachrichtigungsnachricht entspricht, nicht dem Gerätetag des zweiten elektronischen Geräts entspricht, ist das zweite elektronische Gerät so konfiguriert, die zweite Benachrichtigungsnachricht mit einer zweiten Priorität anzuzeigen; wobei die erste Priorität höher ist als die zweite Priorität.

2. System nach Anspruch 1, wobei
die vorgegebene Bedingung umfasst, dass die erste Anwendung nicht auf dem zweiten elektronischen Gerät (002) installiert ist oder dass die erste Anwendung installiert, aber nicht ausgeführt wird und die zweite Anwendung nicht auf dem zweiten elektronischen Gerät installiert ist oder dass die zweite Anwendung installiert, aber nicht ausgeführt wird.

3. System nach Anspruch 1, wobei
der Gerätetag des zweiten elektronischen Gerätes (002) umfasst wenigstens einen von Lernen, Arbeit, Unterhaltung, Sport, Sozialisierung oder Freizeit.

4. System nach einem der Ansprüche 1 bis 3, wobei das erste elektronische Gerät (003) ferner konfiguriert ist:
Erhalte erste Informationen und zweite Informationen, wobei die ersten Informationen eine Klickhäufigkeit einer Benachrichtigungsnachricht der ersten Anwendung innerhalb eines vorgegebenen Zeitraums und eine Dauer für das Springen zu einer Oberfläche der ersten Anwendung nach dem Anklicken der Benachrichtigungsnachricht der ersten Anwendung umfassen; und die zweiten Informationen eine Klickhäufigkeit einer Benachrichtigungsnachricht der zweiten Anwendung innerhalb eines vorgegebenen Zeitraums sowie eine Dauer für das Springen zu einer Oberfläche der zweiten Anwendung nach dem Anklicken der Benachrichtigungsnachricht der zweiten Anwendung umfassen; und
Bestimmen von Interessensniveaus der ersten Benachrichtigungsnachricht (1202) und der zweiten Benachrichtigungsnachricht (1210) anhand der ersten und zweiten Informationen; und
dass das erste elektronische Gerät so konfiguriert ist, dass es die erste Benachrichtigungsnachricht und die zweite Benachrichtigungsnachricht an das zweite elektronische Gerät sendet, umfasst:
das erste elektronische Gerät ist so konfiguriert, dass es: die erste Benachrichtigungsnachricht sowie das Interessensniveau der ersten Benachrichtigungsnachricht an das zweite elektronische Gerät sendet und die zweite Benachrichtigungsnachricht sowie das Interessensniveau der zweiten Benachrichtigungsnachricht an das zweite elektronische Gerät sendet.

5. System nach Anspruch 4, wobei, wenn sowohl die erste Benachrichtigungsnachricht (1202) als auch die zweite Benachrichtigungsnachricht (1210) mit dem Gerätetag des zweiten elektronischen Geräts (002) übereinstimmen, das zweite elektronische Gerät ferner konfiguriert ist zu:
eine Anzeigereihenfolge der ersten Benachrichtigungsnachricht (1202) und der zweiten Benachrichtigungsnachricht (1210) basierend auf den Interessensniveaus der ersten und zweiten Benachrichtigungsnachricht zu bestimmen und die erste Benachrichtigungsnachricht mit der ersten Priorität und die zweite Benachrichtigungsnachricht mit der zweiten Priorität anzuzeigen, falls das Interessensniveau der ersten Benachrichtigungsnachricht höher als das der zweiten Benachrichtigungsnachricht ist, wobei die erste Priorität höher ist als die zweite Priorität.

6. Ein Benachrichtigungsnachrichten-Verarbeitungsverfahren, angewandt auf ein zweites elektronisches Gerät (002), ein erstes elektronisches Gerät (003) und das zweite elektronische Gerät (002), die sich bei demselben Benutzerkonto anmelden, wobei das Verfahren Folgendes umfasst:
Empfangen, durch das zweite elektronische Gerät (002), einer ersten Benachrichtigungsnachricht (1202) einer ersten Anwendung und einer zweiten Benachrichtigungsnachricht (1210) einer zweiten Anwendung vom ersten elektronischen Gerät;
Wenn das zweite elektronische Gerät (002) eine vorgegebene Bedingung erfüllt, bestimmt das zweite elektronische Gerät, ob die Anwendungstypen, die der ersten Benachrichtigung (1202) und der zweiten Benachrichtigung (1210) entsprechen, mit einem Gerätemerkmal des zweiten elektronischen Geräts (002) übereinstimmen, wobei das Gerätemerkmal zur Angabe der Hauptnutzung des zweiten elektronischen Geräts entsprechend einem Anwendungstyp dient, wobei das Gerätemerkmal des zweiten elektronischen Geräts auf mindestens einer der folgenden Grundlagen bestimmt wird: einer Nutzungsdauer oder einer Nutzungshäufigkeit einer Anwendung auf dem zweiten elektronischen Gerät (002); und
Wenn der Anwendungstyp, der der ersten Benachrichtigung entspricht, mit dem Gerätemerkmal des zweiten elektronischen Geräts übereinstimmt, zeigt das zweite elektronische Gerät die erste Benachrichtigung mit einer ersten Priorität an; und wenn der Anwendungstyp, der der zweiten Benachrichtigung entspricht, nicht mit dem Gerätemerkmal des zweiten elektronischen Geräts übereinstimmt, zeigt das zweite elektronische Gerät die zweite Benachrichtigung mit einer zweiten Priorität an, wobei die erste Priorität höher ist als die zweite Priorität.

7. Verfahren nach Anspruch 6, wobei
die vorgegebene Bedingung beinhaltet, dass die erste Anwendung nicht auf dem zweiten elektronischen Gerät (002) installiert ist oder die erste Anwendung zwar installiert, jedoch nicht ausgeführt wird, und die zweite Anwendung nicht auf dem zweiten elektronischen Gerät installiert ist oder die zweite Anwendung installiert, aber nicht ausgeführt wird.

8. Verfahren nach Anspruch 6, wobei
das Gerätemerkmal des zweiten elektronischen Geräts (002) umfasst mindestens eine der folgenden Ausprägungen: Lernen, Arbeit, Unterhaltung, Sport, soziale Interaktion oder Freizeit.

9. Verfahren nach Anspruch 6, wobei
wenn sowohl die erste Benachrichtigung (1202) als auch die zweite Benachrichtigung (1210) mit dem Gerätemerkmal des zweiten elektronischen Geräts (002) übereinstimmen, bestimmt das zweite elektronische Gerät eine Anzeigereihenfolge der ersten und der zweiten Benachrichtigung basierend auf einem Interessensgrad der ersten Benachrichtigung und einem Interessensgrad der zweiten Benachrichtigung, und
zeigt die erste Benachrichtigung mit der ersten Priorität und die zweite Benachrichtigung mit der zweiten Priorität an, wenn der Interessensgrad der ersten Benachrichtigung höher ist als der der zweiten Benachrichtigung, wobei die erste Priorität höher ist als die zweite Priorität;
wobei der Interessensgrad der ersten Benachrichtigungsnachricht basierend auf einer ersten Information und der Interessensgrad der zweiten Benachrichtigungsnachricht basierend auf einer zweiten Information bestimmt wird, wobei die erste Information eine Klickfrequenz einer Benachrichtigungsnachricht der ersten Anwendung innerhalb eines voreingestellten Zeitraums und eine Verweildauer für den Wechsel zu einer Oberfläche der ersten Anwendung nach dem Klicken auf die Benachrichtigungsnachricht der ersten Anwendung umfasst, und wobei die zweite Information eine Klickfrequenz einer Benachrichtigungsnachricht der zweiten Anwendung innerhalb eines voreingestellten Zeitraums und eine Verweildauer für den Wechsel zu einer Oberfläche der zweiten Anwendung nach dem Klicken auf die Benachrichtigungsnachricht der zweiten Anwendung umfasst.

10. Verfahren nach einem der Ansprüche 6 bis 9, wobei
wenn sowohl die erste Benachrichtigungsnachricht (1202) als auch die zweite Benachrichtigungsnachricht (1210) mit dem Gerätetag des zweiten elektronischen Geräts (002) übereinstimmen, zeigt das zweite elektronische Gerät die erste und die zweite Benachrichtigungsnachricht entsprechend der zeitlichen Reihenfolge ihres Empfangs an.

11. Verfahren nach Anspruch 9, wobei
wenn sowohl die erste Benachrichtigungsnachricht (1202) als auch die zweite Benachrichtigungsnachricht (1210) mit dem Gerätetag des zweiten elektronischen Gerätes (002) übereinstimmen und der Interessensgrad der ersten Benachrichtigungsnachricht gleich dem Interessensgrad der zweiten Benachrichtigungsnachricht ist, zeigt das zweite elektronische Gerät die erste und die zweite Benachrichtigungsnachricht entsprechend der zeitlichen Reihenfolge ihres Empfangs an.

12. Verfahren nach einem der Ansprüche 6 bis 11, ferner umfassend:
das Herausfiltern einer unerheblichen Benachrichtigungsnachricht durch das zweite elektronische Gerät (002), wobei die unerhebliche Benachrichtigungsnachricht mindestens eine von einer Werbe-Marketing-Benachrichtigung oder einer Betrugsbenachrichtigung umfasst.

13. Ein zweites elektronisches Gerät (002), wobei das zweite elektronische Gerät ein Display (194), einen Prozessor (110) und einen Speicher (121) umfasst; der Speicher Programm-Anweisungen speichert; und der Prozessor so konfiguriert ist, dass er die im Speicher gespeicherten Programm-Anweisungen ausführt, um das zweite elektronische Gerät zu veranlassen, alle Schritte des Verfahrens nach einem der Ansprüche 6 bis 12 auszuführen.

## Revendications

1. Système de traitement de messages de notification, ledit système de traitement de messages de notification étant un système de communication comprenant un premier dispositif électronique (003) et un second dispositif électronique, le premier dispositif électronique (002) et le second dispositif électronique se connectant au même compte utilisateur, dans lequel
le premier dispositif électronique est configuré pour recevoir un premier message de notification (1202) d'une première application et un second message de notification (1210) d'une seconde application ;
le premier dispositif électronique est en outre configuré pour envoyer le premier message de notification et le second message de notification au second dispositif électronique ;
si le second dispositif électronique satisfait à une condition prédéfinie, le second dispositif électronique est configuré pour déterminer si les types d'application correspondant au premier message de notification et au second message de notification correspondent à une étiquette de dispositif du second dispositif électronique, ladite étiquette de dispositif étant utilisée pour indiquer une utilisation principale du second dispositif électronique associée à un type d'application, et dans laquelle l'étiquette de dispositif du second dispositif électronique est déterminée sur la base d'au moins une des éléments suivants : la durée d'utilisation ou la fréquence d'utilisation d'une application sur le second dispositif électronique ; et
si le type d'application correspondant au premier message de notification correspond à l'étiquette de dispositif du second dispositif électronique, ce dernier est configuré pour afficher le premier message de notification avec une première priorité ; si le type d'application correspondant au second message de notification ne correspond pas à l'étiquette de dispositif du second dispositif électronique, ce dernier est configuré pour afficher le second message de notification avec une seconde priorité ; et la première priorité est supérieure à la seconde priorité.

2. Le système selon la revendication 1, dans lequel
la condition prédéfinie comprend que la première application n'est pas installée sur le second dispositif électronique (002) ou la première application est installée mais non exécutée et la seconde application n'est pas installée sur le second dispositif électronique ou la seconde application est installée mais non exécutée.

3. Le système selon la revendication 1, dans lequel
l'étiquette de dispositif du second dispositif électronique (002) comprend au moins l'un des éléments suivants : apprentissage, travail, divertissement, sport, sociabilité ou loisirs.

4. Le système selon l'une quelconque des revendications 1 à 3, dans lequel le premier dispositif électronique (003) est en outre configuré pour :
obtenir une première information et une seconde information, la première information comprenant une fréquence de clics d'un message de notification de la première application pendant une période de temps prédéfinie et une durée de transition vers une interface de la première application après qu'un message de notification de la première application ait été cliqué ; et la seconde information comprenant une fréquence de clics d'un message de notification de la seconde application pendant une période de temps prédéfinie et une durée de transition vers une interface de la seconde application après qu'un message de notification de la seconde application ait été cliqué ; et
déterminer les niveaux d'intérêt du premier message de notification (1202) et du second message de notification (1210) sur la base de la première information et de la seconde information ; et
le fait que le premier dispositif électronique soit configuré pour envoyer le premier message de notification et le second message de notification au second dispositif électronique comprend :
le premier dispositif électronique est configuré pour : envoyer le premier message de notification ainsi que le niveau d'intérêt du premier message de notification au second dispositif électronique, et envoyer le second message de notification ainsi que le niveau d'intérêt du second message de notification au second dispositif électronique.

5. Le système selon la revendication 4, dans lequel, si le premier message de notification (1202) et le second message de notification (1210) correspondent tous deux à l'étiquette de l'appareil du second dispositif électronique (002), le second dispositif électronique est en outre configuré pour :
déterminer un ordre d'affichage du premier message de notification (1202) et du second message de notification (1210) sur la base des niveaux d'intérêt du premier et du second message de notification, et afficher le premier message de notification avec la première priorité et le second message de notification avec la seconde priorité si le niveau d'intérêt du premier message de notification est supérieur à celui du second message de notification, la première priorité étant supérieure à la seconde priorité.

6. Un procédé de traitement de message de notification, appliqué à un second dispositif électronique (002), un premier dispositif électronique (003) et le second dispositif électronique (002) se connectant à un même compte utilisateur, le procédé comprenant :
recevant, par le second dispositif électronique (002), un premier message de notification (1202) d'une première application et un second message de notification (1210) d'une seconde application depuis le premier dispositif électronique ;
si le deuxième dispositif électronique (002) satisfait à une condition prédéfinie, déterminer, par le deuxième dispositif électronique, si les types d'applications correspondant au premier message de notification (1202) et au deuxième message de notification (1210) correspondent à une étiquette d'appareil du deuxième dispositif électronique (002), l'étiquette d'appareil étant utilisée pour indiquer une utilisation principale du deuxième dispositif électronique correspondant à un type d'application, et l'étiquette d'appareil du deuxième dispositif électronique étant déterminée sur la base d'au moins l'une des durées d'utilisation ou de la fréquence d'utilisation d'une application sur le deuxième dispositif électronique (002) ; et
si le type d'application correspondant au premier message de notification correspond à l'étiquette d'appareil du deuxième dispositif électronique, afficher, par le deuxième dispositif électronique, le premier message de notification avec une première priorité ; et si le type d'application correspondant au deuxième message de notification ne correspond pas à l'étiquette d'appareil du deuxième dispositif électronique, afficher, par le deuxième dispositif électronique, le deuxième message de notification avec une deuxième priorité, la première priorité étant supérieure à la deuxième.

7. Le procédé selon la revendication 6, dans lequel
la condition prédéfinie comprend que la première application n'est pas installée sur le deuxième dispositif électronique (002) ou que la première application est installée mais non exécutée, et que la deuxième application n'est pas installée sur le deuxième dispositif électronique ou que la deuxième application est installée mais non exécutée.

8. Le procédé selon la revendication 6, dans lequel
l'étiquette d'appareil du deuxième dispositif électronique (002) comprend au moins l'un des éléments suivants : apprentissage, travail, divertissement, sport, sociabilité ou loisir.

9. Le procédé selon la revendication 6, dans lequel
si le premier message de notification (1202) et le deuxième message de notification (1210) correspondent tous deux à l'étiquette d'appareil du deuxième dispositif électronique (002), déterminer, par le deuxième dispositif électronique, un ordre d'affichage du premier message de notification et du deuxième message de notification sur la base d'un niveau d'intérêt du premier message de notification et d'un niveau d'intérêt du deuxième message de notification, et
afficher le premier message de notification avec la première priorité et afficher le deuxième message de notification avec la deuxième priorité si le niveau d'intérêt du premier message de notification est supérieur au niveau d'intérêt du deuxième message de notification, la première priorité étant supérieure à la deuxième ;
où le niveau d'intérêt du premier message de notification est déterminé en fonction d'une première information et le niveau d'intérêt du second message de notification est déterminé en fonction d'une seconde information, la première information comprenant une fréquence de clics sur un message de notification de la première application sur une période de temps prédéfinie et la durée de transition vers une interface de la première application après le clic sur le message de notification de la première application, et la seconde information comprenant une fréquence de clics sur un message de notification de la seconde application sur une période de temps prédéfinie et la durée de transition vers une interface de la seconde application après le clic sur le message de notification de la seconde application.

10. Procédé selon l'une quelconque des revendications 6 à 9, dans lequel
si le premier message de notification (1202) et le second message de notification (1210) correspondent tous deux à l'étiquette d'appareil du second dispositif électronique (002), affichage, par le second dispositif électronique, du premier et du second message de notification selon l'ordre chronologique de réception du premier et du second message de notification.

11. Procédé selon la revendication 9, dans lequel
si le premier message de notification (1202) et le second message de notification (1210) correspondent tous deux à l'étiquette d'appareil du second dispositif électronique (002) et que le niveau d'intérêt du premier message de notification est identique à celui du second message de notification, le second dispositif électronique affiche le premier et le second message de notification selon l'ordre chronologique de leur réception.

12. Procédé selon l'une quelconque des revendications 6 à 11, comprenant en outre :
filtrage, par le second dispositif électronique (002), d'un message de notification non significatif, ledit message de notification non significatif comprenant au moins l'une d'une notification de marketing publicitaire ou d'une notification de fraude.

13. Un second dispositif électronique (002), ledit second dispositif électronique comprenant un affichage (194), un processeur (110) et une mémoire (121) ; la mémoire stocke des instructions de programme ; et le processeur est configuré pour exécuter les instructions de programme stockées dans la mémoire, afin d'amener le second dispositif électronique à effectuer toutes les étapes du procédé selon l'une quelconque des revendications 6 à 12.
